# EUROPEAN PATENT APPLICATION

(11) **EP 4 723 442 A1**
(43) Date of publication of application: **08.04.2026**
(21) Application number: 24814492.5
(22) Date of filing: 29.05.2024
(51) Int. Cl.: H02K 11/30, B60L 53/16, H01M 10/60, H01M 10/615, H01R 13/46

(54) **DRIVE SYSTEM AND VEHICLE**

(30) Priority: 31.05.2023 CN 202310639051
(71) Applicant: BYD Company Limited, Guangdong 518118 (CN)
(72) Inventor: CHEN, Fang, Shenzhen, Guangdong 518118 (CN); YU, Fengchuan, Shenzhen, Guangdong 518118 (CN); XUE, Yanchan, Shenzhen, Guangdong 518118 (CN)
(74) Representative: Mathys & Squire
(86) International application number: PCT/CN2024/096106
(87) International publication number: WO 2024/245295

(57) **Abstract**

A drive system and a vehicle are provided. The drive system includes a battery pack, a motor, and a controller. The battery pack includes two sub-battery packs connected in series, an A-wire connection terminal of the battery pack with one end connected to a middle of the two sub-battery packs, a positive direct current bus connection terminal of the battery pack, and a negative direct current bus connection terminal of the battery pack. One end of at least one phase of winding of the motor is connected to the other end of the A-wire connection terminal of the battery pack. The controller includes a power module, and the power module is separately connected to the other end of the at least one phase of winding, a positive electrode of the battery pack, and a negative electrode of the battery pack. The A-wire connection terminal of the battery pack is disposed between the positive direct current bus connection terminal of the battery pack and the negative direct current bus connection terminal of the battery pack.

## Description

This application claims priority to Chinese Patent Application No. CN202310639051.8, filed with the China National Intellectual Property Administration on May 31, 2023 and entitled "DRIVE SYSTEM AND VEHICLE", which is incorporated herein by reference in its entirety.

### TECHNICAL FIELD

This application relates to the field of electric vehicle technologies, and more specifically, to a drive system and a vehicle (electric vehicle).

### BACKGROUND

A drive system of an existing electric vehicle includes a motor, a controller, and a battery pack. The controller is electrically connected to the motor and the battery pack to deliver electrical energy of the battery pack to the motor, thereby enabling the motor to drive wheels to operate.

Specifically, the controller includes a power module, and positive and negative electrodes of the battery pack are connected to positive and negative electrodes of the controller. A three-phase bridge arm is disposed in the power module, and the three-phase bridge arm is connected to one end of a three-phase winding of the motor, so that the battery pack supplies power to the motor through the power module. In some electric vehicles, the battery pack includes two sub-battery packs connected in series, and an A-wire is disposed between the other end of the motor winding and a middle of the two sub-battery packs that are connected in series, so that a battery can be self-heated, thereby operating at a proper temperature. This obviously increases a quantity of product components and increases the difficulty of wiring. How to wire more properly to improve security and stability of the drive system is an urgent problem to be resolved.

### SUMMARY

A series of concepts in a simplified form are introduced in the summary, and is to be further described in detail in the description of embodiments. The summary of this application neither implies an attempt to define key features and essential technical features of the claimed technical solutions, nor implies an attempt to determine the protection scope of the claimed technical solutions.

To at least partially resolve the foregoing problem, a first aspect of this application provides a drive system, including:
a battery pack, including:
a first sub-battery pack and a second sub-battery pack that are connected in series;
an A-wire connection terminal of the battery pack, wherein one end of the A-wire connection terminal of the battery pack is connected to a middle of the first sub-battery pack and the second sub-battery pack;
a positive direct current bus connection terminal of the battery pack, wherein the positive direct current bus connection terminal of the battery pack is connected to a positive electrode of the battery pack; and
a negative direct current bus connection terminal of the battery pack, wherein the negative direct current bus connection terminal of the battery pack is connected to a negative electrode of the battery pack;
a motor, wherein one end of at least one phase of winding of the motor is connected to the other end of the A-wire connection terminal of the battery pack; and
a controller, wherein the controller includes a power module, and the power module includes:
   an at least one-phase connection terminal, wherein the at least one-phase connection terminal is connected to the other end of the at least one phase of winding;
   a positive connection terminal of the power module, connected to the positive electrode of the battery pack; and
   a negative connection terminal of the power module, connected to the negative electrode of the battery pack,
   wherein the A-wire connection terminal of the battery pack is disposed between the positive direct current bus connection terminal of the battery pack and the negative direct current bus connection terminal of the battery pack.

Optionally, the battery pack further includes a battery pack connector socket, and the A-wire connection terminal of the battery pack, the positive direct current bus connection terminal of the battery pack, and the negative direct current bus connection terminal of the battery pack are jointly disposed in the battery pack connector socket.

Optionally, the drive system further includes:
an A-wire, wherein the end of the at least one phase of winding of the motor is connected to the A-wire connection terminal of the battery pack through the A-wire, the A-wire includes a first A-wire, one end of the first A-wire is connected to the controller, the other end of the first A-wire is connected to the A-wire connection terminal of the battery pack, and an end of the first A-wire that is configured to connect to the battery pack is provided with a second A-wire connection terminal.

Optionally, the drive system further includes:
a positive direct current bus, wherein a first end of the positive direct current bus is connected to the positive connection terminal of the power module, a second end of the positive direct current bus is connected to the positive electrode of the battery pack, the positive direct current bus includes a second positive direct current bus connection terminal, and the second positive direct current bus connection terminal is connected to the positive direct current bus connection terminal of the battery pack; and
a negative direct current bus, wherein a first end of the negative direct current bus is connected to the negative connection terminal of the power module, a second end of the negative direct current bus is connected to the negative electrode of the battery pack, the negative direct current bus includes a second negative direct current bus connection terminal, and the second negative direct current bus connection terminal is connected to the negative direct current bus connection terminal of the battery pack,
wherein the second A-wire connection terminal is disposed between the second positive direct current bus connection terminal and the second negative direct current bus connection terminal.

Further, the drive system includes a second plug connector, and the second plug connector is configured to connect to the battery pack connector socket, and the second A-wire connection terminal, the second positive direct current bus connection terminal, and the second negative direct current bus connection terminal are jointly disposed in the second plug connector.

Optionally,
the first A-wire includes an A-wire conductor segment, a first end of the A-wire conductor segment is at least indirectly connected to the controller, and a second end of the A-wire conductor segment is connected to the second A-wire connection terminal;
the positive direct current bus includes a positive direct current bus conductor segment, a first end of the positive direct current bus conductor segment is at least indirectly connected to the controller, and a second end of the positive direct current bus conductor segment is connected to the second positive direct current bus connection terminal;
the negative direct current bus includes a negative direct current bus conductor segment, a first end of the negative direct current bus conductor segment is at least indirectly connected to the controller, and a second end of the negative direct current bus conductor segment is connected to the second negative direct current bus connection terminal; and
the A-wire conductor segment is disposed between the positive direct current bus conductor segment and the negative direct current bus conductor segment.

Optionally,
the first A-wire further includes a first A-wire connection terminal, and two ends of the first A-wire connection terminal are respectively connected to the controller and the first end of the A-wire conductor segment;
the positive direct current bus further includes a first positive direct current bus connection terminal, and two ends of the first positive direct current bus connection terminal are respectively connected to the controller and the first end of the positive direct current bus conductor segment;
the negative direct current bus further includes a first negative direct current bus connection terminal, and two ends of the first negative direct current bus connection terminal are respectively connected to the controller and the first end of the negative direct current bus conductor segment; and
the first A-wire connection terminal is located between the first positive direct current bus connection terminal and the first negative direct current bus connection terminal.

Further, the drive system includes a first plug connector, the first plug connector is configured to connect to the controller, and the first positive direct current bus connection terminal, the first A-wire connection terminal, and the first negative direct current bus connection terminal are jointly disposed in the first plug connector.

Optionally, the second plug connector, the positive direct current bus conductor segment, the negative direct current bus conductor segment, the A-wire conductor segment, the second positive direct current bus connection terminal, the first positive direct current bus connection terminal, the second negative direct current bus connection terminal, the first negative direct current bus connection terminal, the second A-wire connection terminal, the first A-wire connection terminal, and the first plug connector jointly form a connection assembly.

Optionally, lengths of the A-wire conductor segment, the positive direct current bus conductor segment, and the negative direct current bus conductor segment are substantially the same or similar.

Optionally, lengths of the A-wire conductor segment, the positive direct current bus conductor segment, and the negative direct current bus conductor segment are the same between the first plug connector and the second plug connector.

Optionally, wire diameters of the A-wire conductor segment, the positive direct current bus conductor segment, and the negative direct current bus conductor segment are substantially the same or similar.

Optionally, the first A-wire, the positive direct current bus, and the negative direct current bus have same inductance.

Optionally, the first positive direct current bus connection terminal, the first A-wire connection terminal, and the first negative direct current bus connection terminal are jointly threaded through a first magnetic ring.

Optionally, the second positive direct current bus connection terminal, the second A-wire connection terminal, and the second negative direct current bus connection terminal are jointly threaded through a second magnetic ring.

Optionally,
the A-wire includes an A-wire conductive assembly, and the A-wire conductive assembly is disposed in a box of the controller; and
the A-wire conductive assembly includes a first end of the A-wire conductive assembly and a second end of the A-wire conductive member, the first end of the A-wire conductive assembly is connected to the end of the first A-wire, and the second end of the A-wire conductive member is configured to at least indirectly connect to the at least one phase of winding of the motor.

Optionally, the A-wire conductive assembly further includes:
a first A-wire conductive member, wherein the first A-wire conductive member has a first end of the first A-wire conductive member and a second end of the first A-wire conductive member, and the first end of the first A-wire conductive member is the first end of the A-wire conductive assembly; and
a second A-wire conductive member, wherein the second A-wire conductive member has a first end of the second A-wire conductive member and a second end of the second A-wire conductive member, the first end of the second A-wire conductive member is connected to the second end of the first A-wire conductive member, and the second end of the second A-wire conductive member is the second end of the A-wire conductive assembly.

Optionally, the controller further includes a charging connector socket, and the charging connector socket includes a positive charging connection terminal and a negative charging connection terminal;
the positive charging connection terminal is configured to connect to the positive electrode of a charging device, and the negative charging connection terminal is configured to connect to the negative electrode of the charging device; and
the A-wire conductive assembly further includes a third end of the A-wire conductive assembly, and the third end of the A-wire conductive assembly is at least indirectly connected to the positive charging connection terminal.

Optionally, the A-wire conductive assembly further includes a third A-wire conductive member, and the third A-wire conductive member has a first end of the third A-wire conductive member and a second end of the third A-wire conductive member; and
the first A-wire conductive member further includes a third end of the first A-wire conductive member, the first end of the third A-wire conductive member is connected to the third end of the first A-wire conductive member, and the second end of the third A-wire conductive member is the third end of the A-wire conductive assembly; or
the first end of the third A-wire conductive member is connected to the first end of the second A-wire conductive member, and the second end of the third A-wire conductive member is the third end of the A-wire conductive assembly.

Further, the A-wire conductive assembly includes a fourth A-wire conductive member; and
two ends of the fourth A-wire conductive member are respectively connected to the third end of the first A-wire conductive member and the first end of the third A-wire conductive member, so that the first end of the third A-wire conductive member is connected to the third end of the first A-wire conductive member; or
two ends of the fourth A-wire conductive member are respectively connected to the first end of the second A-wire conductive member and the first end of the third A-wire conductive member, so that the first end of the third A-wire conductive member is connected to the first end of the second A-wire conductive member.

Optionally, each second end of the three-phase winding is connected, through the A-wire connection terminal of the battery pack, to the middle of the first sub-battery pack and the second sub-battery pack that are connected in series.

A second aspect of this application provides a vehicle, including the drive system according to any one of the foregoing technical solutions, wherein the motor is connected to wheels of the vehicle.

### BRIEF DESCRIPTION OF DRAWINGS

To make the advantages of this application easier to understand, the foregoing brief description of this application will be described in more detail with reference to a specific implementation shown in the accompanying drawings. It will be understood that these accompanying drawings describe only a typical implementation of this application, and therefore are not intended to limit the protection scope of this application. The accompanying drawings describe and explain this application with additional features and details.

In the accompanying drawings:
FIG. 1 is a perspective schematic diagram of an electric assembly according to a preferred implementation of this application;
FIG. 2 is a schematic diagram of a circuit principle of a drive system according to a preferred implementation of this application;
FIG. 3 is an exploded schematic diagram of some components of a controller, a first connection assembly, and a second connection assembly of a drive system according to a preferred implementation of this application;
FIG. 4 is a top schematic diagram of the electric assembly shown in FIG. 1, where an upper cover of a controller is omitted;
FIG. 5 is a schematic diagram of a connection between a controller and a first connection assembly of a drive system according to a preferred implementation of this application;
FIG. 6 is an exploded perspective schematic diagram of a charging connector socket shown in FIG. 3;
FIG. 7 is an exploded perspective schematic diagram of the electric assembly shown in FIG. 1;
FIG. 8 is a side cross-sectional schematic diagram of a controller according to a preferred implementation of this application;
FIG. 9 is a schematic composition diagram of a specific example of an A-wire conductive assembly of the controller shown in FIG. 3;
FIG. 10 is a schematic composition diagram of another specific example of an A-wire conductive assembly of the controller shown in FIG. 3;
FIG. 11 is a side cross-sectional schematic diagram of a first contactor shown in FIG. 3;
FIG. 12 is a schematic composition diagram of a sub-positive conductive assembly of the controller shown in FIG. 3;
FIG. 13 is a schematic composition diagram of a sub-negative conductive assembly of the controller shown in FIG. 3;
FIG. 14 is a schematic diagram of a capacitor assembly and a power module of a controller according to a preferred implementation of this application;
FIG. 15 is a top perspective schematic diagram of the capacitor assembly shown in FIG. 14;
FIG. 16 is a bottom perspective schematic diagram of the capacitor assembly shown in FIG. 14;
FIG. 17 is an exploded perspective schematic diagram of the capacitor assembly shown in FIG. 14;
FIG. 18 is a partially enlarged schematic diagram of a connection part between the capacitor assembly and the power module shown in FIG. 14; and
FIG. 19 is an exploded schematic diagram of a connection between a first connection assembly and a battery pack of the drive system shown in FIG. 2.

### Descriptions of reference numerals:

4: Second connection assembly
9: First connection assembly
9a: First plug connector
9B: Second plug connector
10: Box
32: Second opening
51: Capacitor housing
55: Capacitor assembly
56: Conductive connection sheet
56A: Overlapping position
57: Second positioning component
58: Positive direct current bus connection terminal
58A: Positive direct current bus support position
59: A-wire support position
60: Negative direct current bus connection terminal
60a: Negative direct current bus support position
62: First fuse connection terminal
63: Second fuse connection terminal
66: Second fuse output terminal
67: First capacitor positive input terminal
68: Capacitor negative input terminal
70: Negative connection terminal
71: Positive connection terminal
72: Second capacitor positive input terminal
75: Capacitor negative output terminal
76: Capacitor insulating member
77: Capacitor positive output terminal
79: Positive connection terminal of the power module
79A: Sub-power module positive connection terminal
80: Power module insulating member
81: Negative connection terminal of the power module
81A: Sub-power module negative connection terminal
82. First positioning component
83: Power module
84: Three-phase connection terminal
91: Insulating member
92. Second negative conductive member
92A: First end of the second negative conductive member
92B: Second end of the second negative conductive member
93: First magnetic ring
94: Second magnetic ring
99: First terminal seat
100: Hall
101: Three-phase connection terminal of the first terminal seat
102: Heat-conducting member
115: Charging connector socket
117: Third magnetic ring
116A: First magnetic ring seat capacitor
116B: Second magnetic ring seat capacitor
122: First switching element/first contactor
123: Third A-wire conductive member
123A: First end of the third A-wire conductive member
123B: Second end of the third A-wire conductive member
124: Second switching element/second contactor
125. First positive conductive member
125A: First end of the first positive conductive member
125B: Second end of the first positive conductive member
125C: Third end of the first positive conductive member
126: First negative conductive member
126A: First end of the first negative conductive member
126B: Second end of the first negative conductive member
127: Second positive conductive member
127A: First end of the second positive conductive member
127B: Second end of the second positive conductive member
128: Third positive conductive member
128A: First end of the third positive conductive member
128B: Second end of the third positive conductive member
131: Fourth A-wire conductive member
131A: First end of the fourth A-wire conductive member
131B: Second end of the fourth A-wire conductive member
132. Fixed seat
133: Third fuse
134: First fuse
135: Second fuse
136: Second A-wire conductive member
136A: First end of the second A-wire conductive member
136B: Second end of the second A-wire conductive member
142: Motor A-wire terminal
143: Motor three-phase terminal
144: Motor A-wire connection terminal
145: Motor three-phase connection terminal
146: Motor terminal seat
147: Electrical control three-phase connection terminal
148: Electrical control A-wire connection terminal
166: Magnetic ring mounting slot
167. Wire harness clamping part
168: First ground terminal
169A: First capacitor mounting slot
169B: Second capacitor mounting slot
169C: First slot side wall
169D: Second slot side wall
170: Positive charging connection terminal
171: Negative charging connection terminal
172: Second ground terminal
173: First capacitor
174: Second capacitor
176: First A-wire conductive member
176A: First end of the first A-wire conductive member
176B: Second end of the first A-wire conductive member
176C: Third end of the first A-wire conductive member
179: First capacitor core
181: Second capacitor core
600: Battery pack
609: Battery pack connector socket
601: Battery pack A-wire copper bar
602: Battery pack positive bus copper bar
603: Battery pack negative bus copper bar
611: A-wire connection terminal of the battery pack
612: Positive bus connection terminal of the battery pack
613: Negative bus connection terminal of the battery pack
621: First contactor contact
622: Second contactor contact
623A/623B: Terminal post
624: Moving plate
625: Spring
626: Connecting shaft
627: Limiting post
628: Coil
629: Magnet
700: Motor
701: Motor winding
800: Controller
801: A-wire
801A: First A-wire
801B: Third Y capacitor
801C: Battery pack A-wire
803: Three-phase bridge arm
804: Upper bridge
805: Lower bridge
806: Second conductive assembly
807: Positive direct current bus
807B: First Y capacitor
808: Negative direct current bus
808B: Second Y capacitor
809: First connector socket
810: First plug interface
811: First A-wire connection terminal/plug connector A-wire connection terminal
812: Second A-wire connection terminal
813: A-wire conductor segment
814: First A-wire
821: First positive direct current bus connection terminal/plug connector positive direct current bus connection terminal
822: Second positive direct current bus connection terminal
823: Positive direct current bus conductor segment
831: First negative direct current bus connection terminal/plug connector negative direct current bus connection terminal
832: Second negative direct current bus connection terminal
833: Negative direct current bus conductor segment
840: Negative conductive assembly
841. First end of the negative conductive assembly
842: Second end of the negative conductive assembly
843: Sub-negative conductive assembly
844. First end of the sub-negative conductive assembly
845: Second end of the sub-negative conductive assembly
850: Positive conductive assembly
851. First end of the positive conductive assembly
852. Second end of the positive conductive assembly
853. Sub-positive conductive assembly
854. First end of the sub-positive conductive assembly
855: Second end of the sub-positive conductive assembly
860: A-wire conductive assembly
861: First end of the A-wire conductive assembly
862: Second end of the A-wire conductive assembly
863: Third end of the A-wire conductive assembly
865: Additional positive conductive assembly
866. First end of the additional positive conductive assembly
867. Second end of the additional positive conductive assembly
870: Electric assembly
880: Power socket
881: Insulating substrate
882: Power jack
883: Isolation wall
884: Power module
885: First socket side
886: Second socket side
890: Drive system
901. First capacitor positive conductive sheet
902: First capacitor positive conductive sheet body
903: Second capacitor positive conductive sheet
904. Second capacitor positive conductive sheet body
905. Capacitor negative conductive sheet
906: Capacitor negative conductive sheet body
911: Insulating base
U1: First sub-battery pack
U2: Second sub-battery pack

### DESCRIPTION OF EMBODIMENTS

In the following description, a large quantity of specific details are provided to provide a more thorough understanding of this application. However, for a person skilled in the art, it is clear that this application can be implemented without one or more of these details. In another example, to avoid confusion with this application, some technical features well-known in the art are not described.

To fully understand this application, the following descriptions are provided in detail. It will be understood that, these implementations are provided so that disclosure of this application is thorough and complete, and concepts of these example implementations are fully conveyed to a person of ordinary skill in the art. Clearly, implementation of the implementations of this application is not limited to special details familiar to a person skilled in the art. A preferred implementation of this application is described in detail as follows. However, in addition to these detailed descriptions, this application may have another implementation.

Ordinal numbers such as "first" and "second" referenced in this application are merely identifiers, and do not have any other meaning, for example, a specific order. Moreover, for example, the term "first component" does not imply existence of "second component", and the term "second component" does not imply existence of "first component". The use of words such as "first", "second" and "third" does not mean any order, and these words may be interpreted as names.

It should be noted that the term "top", "bottom", "front", "back", "left", "right", "inside", "outside", and similar expressions used in this application are merely for purposes of description, and constitute no limitation.

This application provides a capacitor assembly for a controller, a magnetic ring seat assembly, a controller that includes the capacitor assembly and/or the magnetic ring seat assembly and that is at least configured to control a motor, an electric assembly including the controller, a drive system including the electric assembly, and a vehicle including the drive system. It will be understood that the vehicle according to this application is an electric vehicle.

Example implementations according to this application now are described in more detail with reference to the accompanying drawings.

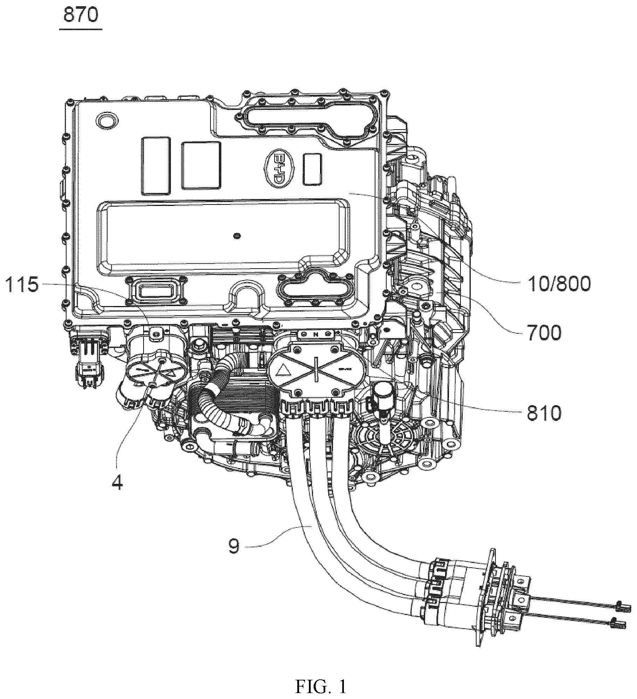

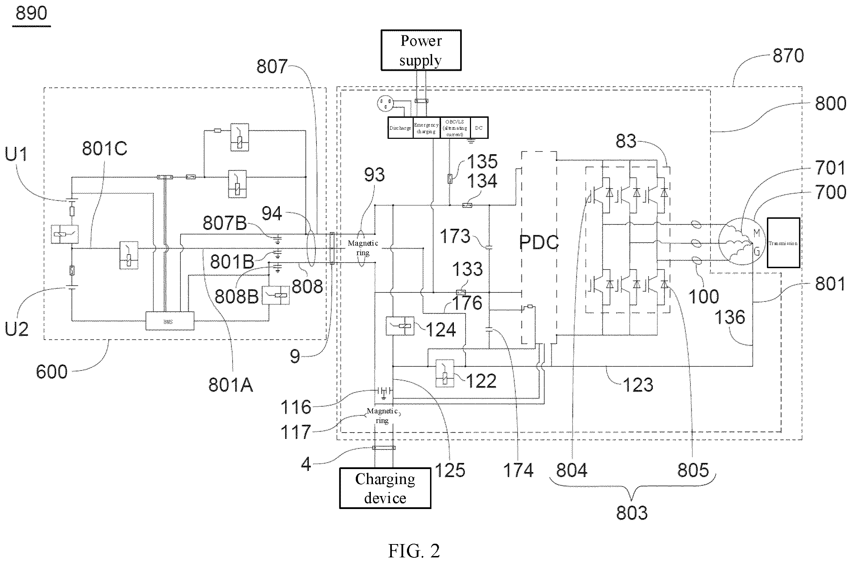

As shown in FIG. 1, in a preferred implementation, an electric assembly 870 according to this application includes a controller 800 and a motor 700 according to a preferred implementation of this application. As shown in FIG. 2, in a preferred implementation, a drive system 890 according to this application includes a battery pack 600 and an electric assembly 870 according to a preferred implementation of this application. The controller 800 is connected to a charging device (for example, an electric gun or a distribution box) through a second connection assembly 4 (for example, a wire lug) and is connected to the battery pack 600 through a first connection assembly 9 (for example, a wire lug).

The battery pack 600 is configured to store energy and provide a power supply (power battery), the controller 800 is configured to control the motor 700, and the motor 700 is connected to wheels of an electric vehicle to drive the wheels to rotate. The controller 800 is separately connected to the motor 700 and the battery pack 600 to transport electrical energy of the battery pack 600 to the motor 700.

In some embodiments, the controller 800 includes a box 10. In addition, a plurality of openings or sockets (plug interfaces) are disposed in the box 10, to connect to the motor 700, the battery pack 600, the charging device, and the like through a connection wire. For example, a charging connector socket 115 is disposed in the box 10, and the second connection assembly 4 is plugged into the charging connector socket 115, to connect to the charging device.

In some embodiments, a first plug interface 810 is disposed in the box 10, and the first plug interface 810 is configured to plug in the first connection assembly 9, to connect to a battery pack 600.

The following first briefly describes an operating principle of the drive system 890 with reference to FIG. 2.

The motor 700 includes a three-phase winding 701 (inductor).

The controller 800 includes a power module 83. In some embodiments, the power module 83 includes a three-phase bridge arm 803, and each phase of bridge arm further includes an upper bridge 804 and a lower bridge 805. Each phase of bridge arm 803 includes, for example, two power switch transistors connected in series. In some embodiments, the power switch transistor may be an IGBT, and the two power switch transistors respectively form the upper bridge 804 and the lower bridge 805. A first end of the three-phase winding 701 is connected to a middle of the three-phase bridge arm 803. It should be noted that, the middle of the three-phase bridge arm 803 refers to an electrical position located between two power switches, and the electrical position is separately connected to both the upper bridge 804 and the lower bridge 805, for example, connected to the upper bridge 804 in one path direction and connected to the lower bridge 805 in another path direction. The electrical position is a connection point between the upper bridge 804 and the lower bridge 805, rather than a midpoint position of the three-phase bridge arm 803.

In some embodiments, the battery pack 600 includes a first sub-battery pack and a second sub-battery pack (U1/U2) that are connected in series, which are respectively denoted as a first sub-battery pack U1 and a second sub-battery pack U2. For example, the battery pack 600 includes a housing, and the first sub-battery pack U1 and the second sub-battery pack U2 are disposed in the housing. A negative electrode of the first sub-battery pack U1 is connected to a positive electrode of the second sub-battery pack U2, and a positive electrode of the first sub-battery pack U1 forms a positive electrode of the battery pack 600, that is, a direct current positive electrode of the first sub-battery pack and the second sub-battery pack (the first sub-battery pack U1 and the second sub-battery pack U2) that are connected in series. A negative electrode of the second sub-battery pack U2 forms a negative electrode of the battery pack 600, that is, a direct current negative electrode of the first sub-battery pack and the second sub-battery pack (the first sub-battery pack U1 and the second sub-battery pack U2) that are connected in series.

An A-wire 801 is connected between a second end of an at least one phase of winding 701 and a middle of the first sub-battery pack U1 and the second sub-battery pack U2, that is, the second end of the at least one phase of winding 701 is connected to the middle of the first sub-battery pack U1 and the second sub-battery pack U2 through the A-wire 801. In this application, the A-wire is a type of conductor, and may be any one of or a combination of two or more of a round wire, a flat wire, a cable, a copper bar, and the like. Similarly, the middle of the first sub-battery pack U1 and the second sub-battery pack U2 refers to an electrical position located between the first sub-battery pack U1 and the second sub-battery pack U2. The electrical position is separately connected to both the first sub-battery pack U1 and the second sub-battery pack U2, for example, connected to the first sub-battery pack U1 (for example, the negative electrode of the U1) in one path direction and connected to the second sub-battery pack U2 (for example, the positive electrode of the U2) in another path direction.

In some embodiments, the A-wire 801 is connected between the second end of the three-phase winding 701 and the middle of the first sub-battery pack U1 and the second sub-battery pack U2, that is, each second end of the three-phase winding 701 is connected, through the A-wire 801, to the middle of the first sub-battery pack U1 and the second sub-battery pack U2 that are connected in series.

It will be understood from FIG. 2 that the battery pack 600 includes the first sub-battery pack U1 and the second sub-battery pack U2. In a positive half cycle of a fundamental period, when the upper bridge 804 is turned on and the lower bridge 805 is turned off, the first sub-battery pack U1 discharges electricity to charge the three-phase winding 701 through the upper bridge 804. When the lower bridge 805 is turned on and the upper bridge 804 is turned off, the three-phase winding 701 charges the second sub-battery pack U2, and then forms a loop through the lower bridge 805. In a negative half cycle of the fundamental period, when the lower bridge 805 is turned on and the upper bridge 804 is turned off, the second sub-battery pack U2 discharges electricity to the three-phase winding 701, and forms a loop through the lower bridge 805. When the upper bridge 804 is turned on and the lower bridge 805 is turned off, the three-phase winding 701 continues to flow, and charges the first sub-battery pack U1 through the upper bridge 804. Through mutual charging and discharging between the first sub-battery pack and the second sub-battery pack, the battery generates heat due to internal resistance, to implement self-heating of the battery. Therefore, in this application, the A-wire 801 is also referred to as a heating A-wire, and extends from the second end of the winding 701 of the motor 600 to the middle of the first sub-battery pack U1 and the second sub-battery pack U2 of the battery pack 600.

In some embodiments, the controller 800 further includes a first capacitor 173. The first capacitor 173 will be understood as a bus capacitor, a positive electrode of the first capacitor 173 is connected to a positive direct current bus 807, and a negative electrode of the first capacitor 173 is connected to a negative direct current bus 808.

In some embodiments, the positive direct current bus 807 and the negative direct current bus 808 are jointly connected to a first filter. For example, the first filter may be a magnetic ring 93, which is denoted as a first magnetic ring 93. To facilitate better mounting of the positive direct current bus 807 and the negative direct current bus 808, the positive direct current bus 807 and the negative direct current bus 808 may be threaded through the first magnetic ring 93.

Referring to FIG. 2, in some embodiments, a filter includes a first Y capacitor 807B, a second Y capacitor 808B, and a third Y capacitor 801B. One end of the first Y capacitor 807B is connected to the positive direct current bus 807, and the other end of the first Y capacitor 807B is grounded. One end of the second Y capacitor 808B is connected to the negative direct current bus 808, and the other end of the second Y capacitor 808B is grounded. One end of the third Y capacitor 801B is connected to the A-wire 801, and the other end of the third Y capacitor 801B is grounded. The three Y capacitors may be disposed in the box 10 of the controller 800, may be disposed in the housing of the battery pack 600, or may be simultaneously disposed in both positions.

Referring to FIG. 2, when charging the battery pack 600, the charging device is connected to the controller 800, and charges the battery pack 600 through the controller 800. When a charging voltage of the charging device is relatively low (for example, less than 750 V, for example, 470 V), after a charging current enters the controller 800, in some embodiments, a negative charging current reaches the negative electrode of the battery pack 600 through a negative electrode of the second connection assembly 4 and the negative direct current bus 808; and a positive charging current reaches the positive electrode of the battery pack 600 through a first switching element 122 (for example, a first contactor), a second A-wire conductive member 136, the motor winding 701, the upper bridge 804 of the power module 83, and the positive direct current bus 807. In this charging method, a charging voltage can be increased, and charging efficiency can be improved.

It will be understood that a winding inside the motor 700 and a part of the A-wire 801 are reused during boost charging. To absorb and filter a ripple current at a direct current end, in some embodiments, in a boost charging process, to better optimize EMC of the power module, a second capacitor 174 is provided, and both a negative electrode of the second capacitor 174 and the negative electrode of the first capacitor 173 are connected to a negative electrode of the charging device. A positive electrode of the charging device is also connected to a positive electrode of the second capacitor 174 when being connected to the second A-wire conductive member 136, thereby enabling positive and negative electrodes of direct current charging to be connected and conducted with the second capacitor 174. In this way, the battery pack is charged in a motor boosting manner, to improve charging efficiency.

In some embodiments, a positive charging connector and a negative charging connector are jointly connected to a second filter. For example, the second filter may be a magnetic ring 117, which is denoted as a third magnetic ring 117. To facilitate better mounting of the positive charging connector and the negative charging connector, the positive charging connector and the negative charging connector are threaded through the third magnetic ring 117.

In some embodiments, to better optimize EMC of the controller 800, the controller 800 further includes a third filter, and the positive charging connector and the negative charging connector are jointly connected to the third filter. For example, the third filter may be a pair of Y capacitors 116, and the pair of Y capacitors 116 can better filter out common-mode interference.

When the charging voltage of the charging device is relatively high (for example, reaches 750 V), after the charging current enters the controller 800, the negative charging current still flows to the battery pack through a same path. The positive charging current flows to the first connection assembly 9 through a second switching element 124 (for example, a second contactor). In other words, no boost charging is required.

Therefore, the controller 800 chooses to turn on the first switching element 122 or the second switching element 124 by monitoring the charging voltage of the charging device, so that the positive charging current reaches the battery pack 600 through different paths. When the first switching element 122 is turned on and the second switching element 124 is turned off, the positive charging current flows through the motor winding 701, and the charging voltage is boosted. When the first switching element 122 is turned off and the second switching element 124 is turned on, the positive charging current directly flows to the positive direct current bus 807 of the battery pack 600, rather than flows through the motor winding 701, and the charging voltage remains at an original voltage value.

The positive direct current bus 807 and the negative direct current bus 808 are also collectively referred to as a direct current bus.

In some embodiments, when the battery pack 600 supplies power to the motor 700, a direct current from the battery pack 600 sequentially flows through the direct current bus, the first connection assembly 9, and the first magnetic ring 93 and then flows into the first capacitor 173, and after being converted into an alternating current by the power module 83, flows to the motor 700 through an alternating current Hall 100, to drive the motor 700.

In some embodiments, a negative current passes through a third fuse 133 before entering the first capacitor 173. To protect boost charging and self-heating circuits, the positive current flows through a first fuse 134 when flowing from the first capacitor 173 to the direct current bus.

In some embodiments, to more conveniently charge a vehicle, a power module 884 is additionally provided in the controller 800, and the power module 884 is connected to an external alternating current power supply (for example, mains power, AC 220 V) through an alternating current charging and discharging connector 3. To ensure security, a second fuse 135 is further provided between the power module 884 and the first capacitor 173.

In this application, two electrical positions being "at least indirectly connected" means that the two are directly connected (a direct equipotential connection) through a conductor or indirectly connected (equivalent to the equipotential connection) through an electronic element.

The following describes a specific molded product in detail in different embodiments.

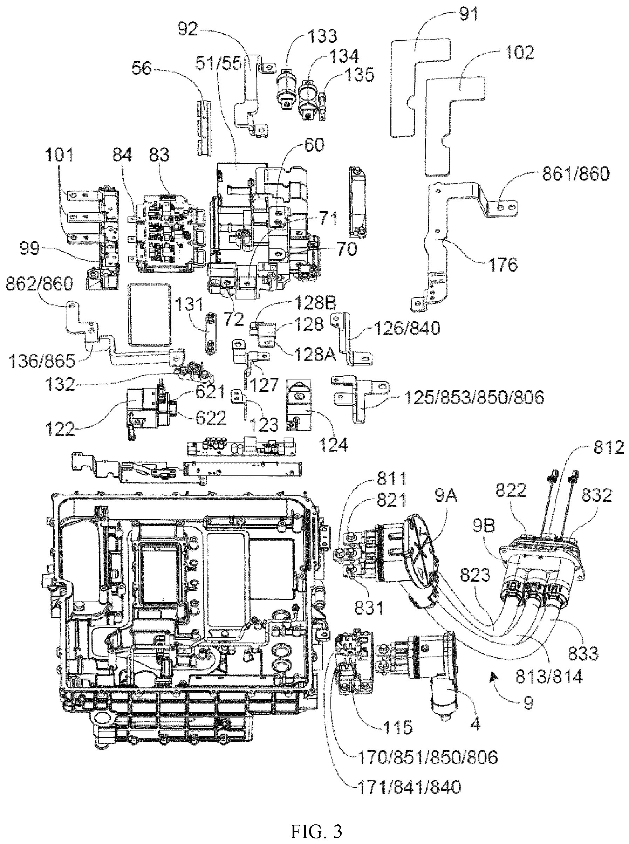

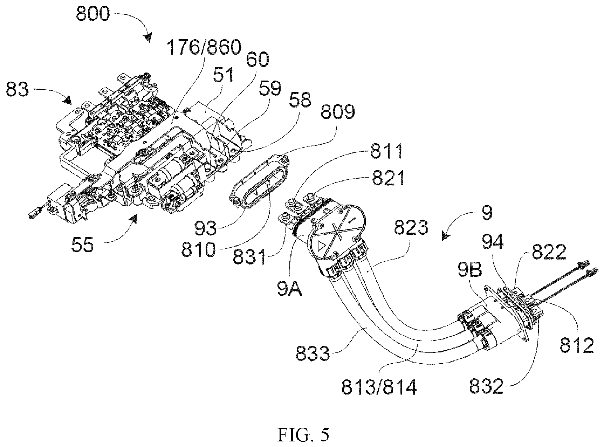

As shown in FIG. 3 to FIG. 5, in some embodiments, the A-wire 801 does not pass through the controller 800, and is connected from the middle of the first sub-battery pack U1 and the second sub-battery pack U2 to the second end of the at least one phase of winding 701 of the motor 700. For example, one end of the A-wire 801 is connected to the battery pack 600 after passing through a casing of the motor 700. In this way, the A-wire 801 is equivalent to being disposed outside the box 10 of the controller 800. In this embodiment, a design of the A-wire 801 is relatively simple. However, a part of the A-wire between the casing of the motor 700 and the housing of the battery pack 600 needs to be covered, and the part of the A-wire is relatively long, so that a plurality of fasteners need to be separately provided for fastening. In addition, highfrequency interference of the power module 83 is transmitted to the A-wire 801 through the motor 700, causing an EMC problem of the entire drive system 890.

In some embodiments, for example, when it is required to reuse the three-phase winding 701 of the motor 700 and the power module 83 of the controller 800 to implement a boost charging function, if the A-wire 801 does not pass through the controller 800, it is further required to provide, in the controller 800, a second A-wire that connects the second end of the at least one phase of winding 701 of the motor 700 and the positive charging conductor. For example, the second A-wire may be the second A-wire conductive member 136.

To resolve the EMC problem of the entire drive system 890, in some embodiments, a part of the A-wire 801 is disposed in a fourth filter. For example, the fourth filter is a magnetic ring, which may be denoted as a fourth magnetic ring. The fourth magnetic ring is located in a position conducive to threading of the A-wire. The fourth magnetic ring performs a filtering function, thereby mitigate an EMC problem caused by the channel A-wire 801. In some embodiments, a part of the A-wire 801 is threaded through the fourth magnetic ring alone.

To resolve the problem that the part of the A-wire between the casing of the motor 700 and the housing of the battery pack 600 needs to be covered, in some embodiments, a part of the A-wire 801 is disposed in the box 10 of the controller 800. In this way, only a part of the A-wire located between the housing of the battery pack 600 and the box 10 of the controller 800 needs to be covered, and other parts do not need to be covered. Meanwhile, these embodiments also resolve the problem that the part of the A-wire between the casing of the motor 700 and the housing of the battery pack 600 is relatively long, and a plurality of fasteners need to be separately provided for fastening.

In some embodiments, the A-wire 801 is implemented by a plurality of interconnected and tangible conductive members (for example, conductors, copper bars). In this application, as shown in FIG. 3, for example, the A-wire 801 located in the box 10 of the controller 800 is specially an A-wire conductive assembly 860, which includes, for example, a first A-wire conductive member 176 and the second A-wire conductive member 136. For example, the A-wire conductive assembly 860 may also include a third A-wire conductive member 123, and may further include a fourth A-wire conductive member 131, or the like.

In some embodiments, the A-wire 801 may have a plurality of connection means, or include a plurality of segments. In this application, a segment of the A-wire 801 is denoted as a first A-wire. For example, in some embodiments, a first A-wire 801A may be a segment from the middle of the first sub-battery pack U1 and the second sub-battery pack U2 that are connected in series to the controller 800 (referring to FIG. 2, a second end of the first A-wire is connected to the middle of the first sub-battery pack and the second sub-battery pack that are connected in series, and a first end of the first A-wire is connected to the controller 800, for example, connected to a plug interface on the box 10 of the controller 800). Alternatively, a first A-wire 801C may be an internal A-wire of the battery pack 600, which is also referred to as a battery pack A-wire (referring to FIG. 2, a first end of the first A-wire 801C is connected to the housing of the battery pack 600, and a second end is connected to the middle of the first sub-battery pack U1 and the second sub-battery pack U2, where the first A-wire 801C will be understood as a part of the first A-wire 801A). Alternatively, the first A-wire 814 may be a segment from the battery pack 600 to the controller 800 (referring to FIG. 3, a first end of the first A-wire 814 is connected to a plug interface on the box of the controller 800, and a second end of the first A-wire 814 is connected to a plug interface on the housing of the battery pack 600, for example, disposed in the first connection assembly 9, where the first A-wire 814 will be understood as a part of the first A-wire 801A).

In a heating process of the battery pack 600, the A-wire 801 alternately forms a loop with the positive direct current bus 807 and the negative direct current bus 808. Therefore, in some embodiments, at least a part of the A-wire 801 is located between the positive direct current bus 807 and the negative direct current bus 808, so that a wire harness can be conveniently disposed. For example, at least a part of the first A-wire 801A is located between the positive direct current bus 807 and the negative direct current bus 808.

In some embodiments, the first A-wire, the positive direct current bus, and the negative direct current bus have same inductance. The three conductors have the same inductance, which can ensure voltage balance between the A-wire and the positive electrode of the battery pack, and between the A-wire and the negative electrode of the battery pack, thereby improving security performance. In some embodiments, a part of the positive direct current bus 807, a part of the negative direct current bus 808, and a part of the A-wire 801 are jointly disposed in the first filter. In some embodiments, the first filter is the first magnetic ring 93, and a part of the positive direct current bus 807, a part of the negative direct current bus 808, and a part of the A-wire 801 are jointly threaded through the first magnetic ring 93 (jointly threaded through at least one magnetic ring), which can suppress common-mode interference and has a good suppression effect on highfrequency noise. In some embodiments, a part of the first A-wire and a part of the direct current bus are jointly threaded through the first magnetic ring 93.

In some embodiments, the first magnetic ring 93 is disposed in at least one of the controller 800 and the battery pack 600. For example, the first magnetic ring 93 may be disposed in the box 10 of the controller 800, or the first magnetic ring 93 may be disposed in the housing of the battery pack 600. In some embodiments, a fifth magnetic ring (not shown in the figure) may further be disposed in the housing of the battery pack 600 to optimize EMC of the battery pack. When the first A-wire and the direct current bus need to pass through the box 10 of the controller 800, the first magnetic ring 93 is disposed in the box 10. When the first A-wire and the direct current bus need to pass through the housing of the battery pack 600, in some embodiments, the first magnetic ring 93 is disposed in the housing.

In some embodiments, only a positive direct current bus connection terminal and a negative direct current bus connection terminal that are disposed on one side of the battery pack 600, and an A-wire connection terminal is not disposed on a same side as the positive direct current bus connection terminal and the negative direct current bus connection terminal. As a result, a connector socket needs to be separately configured for the A-wire connection terminal, leading to an increase in costs.

In some embodiments, among the positive direct current bus connection terminal of the battery pack, the negative direct current bus connection terminal of the battery pack, and the A-wire connection terminal of the battery pack on the battery pack 600, the A-wire connection terminal of the battery pack is not disposed between the positive direct current bus connection terminal of the battery pack and the negative direct current bus connection terminal of the battery pack, which leads to a large difference between a part of the A-wire in the battery pack 600 and each of a part of the positive direct current bus and a part of the negative direct current bus in the battery pack 600, and further leads to a relatively large common-mode current between a part of the A-wire, a part of the positive direct current bus, and a part of the negative direct current bus in the battery pack 600, causing voltage imbalance between the A-wire and the positive electrode of the battery pack, and between the A-wire and the negative electrode of the battery pack, which brings a potential security hazard to the entire drive system.

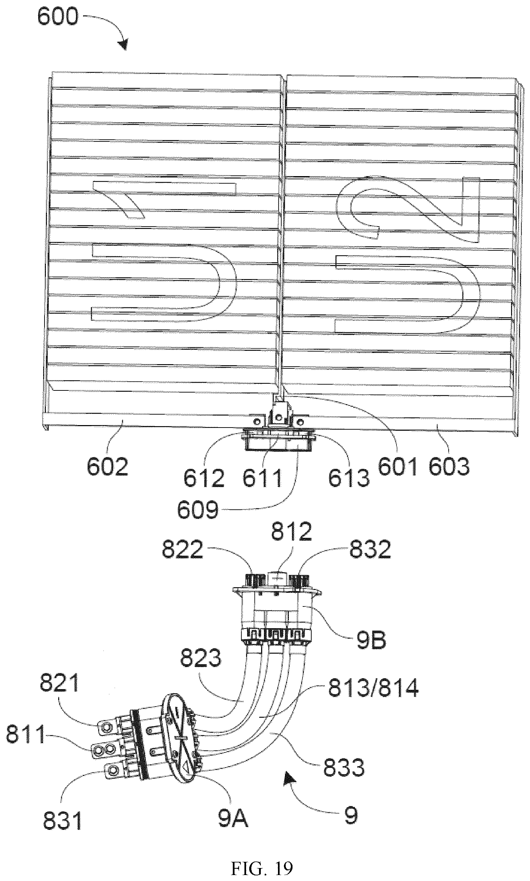

In some embodiments, referring to FIG. 19, the battery pack 600 includes a battery pack connector socket 609. To solve a problem of increased costs caused by a separate configuration of a connector socket for the A-wire connection terminal on one side of the battery pack 600, an A-wire connection terminal 611 of the battery pack, a positive direct current bus connection terminal 612 of the battery pack, and a negative direct current bus connection terminal 613 of the battery pack are disposed in the battery pack connector socket 609. One end of the A-wire connection terminal 611 of the battery pack is connected to the middle of the first sub-battery pack U1 and the second sub-battery pack U2 through a battery pack A-wire copper bar 601, and the other end is connected to the second end of the at least one phase of winding of the motor 700. The positive direct current bus connection terminal 612 of the battery pack is connected to the positive electrode of the battery pack 600 through a battery pack positive copper bar 602. The negative direct current bus connection terminal 613 of the battery pack is connected to the negative electrode of the battery pack 600 through a battery pack negative copper bar 603. The A-wire connection terminal 611 of the battery pack is disposed between the positive direct current bus connection terminal 612 of the battery pack and the negative direct current bus connection terminal 613 of the battery pack.

As shown in FIG. 3 to FIG. 5, in some embodiments, the A-wire connection terminal (denoted as a second A-wire connection terminal 812), the positive direct current bus connection terminal (denoted as a second positive direct current bus connection terminal 822), and the negative direct current bus connection terminal (denoted as a second negative direct current bus connection terminal 832) that are of the first connection assembly 9 and that are configured to connect to a side of the battery pack 600 are jointly disposed in a same second plug connector 9B, that is, the second plug connector 9B is configured to connect to the battery pack 600. For example, as shown in FIG. 19, the second plug connector 9B is configured to connect to the battery pack connector socket 609. In other words, the battery pack connector socket 609 is configured to insert the second plug connector 9B. It will be understood that the second A-wire connection terminal 812 is configured to connect to the A-wire connection terminal 611 of the battery pack, the second positive direct current bus connection terminal 822 is configured to connect to the positive direct current bus connection terminal 612 of the battery pack, and the second negative direct current bus connection terminal 832 is configured to connect to the negative direct current bus connection terminal 613 of the battery pack.

As shown in FIG. 3 to FIG. 5, to resolve a problem of voltage imbalance between the A-wire and the positive electrode of the battery pack, and between the A-wire and the negative electrode of the battery pack, in some embodiments, the second A-wire connection terminal 812 is disposed between the second positive direct current bus connection terminal 822 and the second negative direct current bus connection terminal 832. In some embodiments, in a direction perpendicular to an extension direction of the second A-wire connection terminal 812, the second positive direct current bus connection terminal 822, and the second negative direct current bus connection terminal 832, the second A-wire connection terminal 812, the second positive direct current bus connection terminal 822, and the second negative direct current bus connection terminal 832 at least partially overlap.

As shown in FIG. 3 to FIG. 5, in some embodiments, the box 10 of the controller 800 is provided with a first plug interface 810. The first plug interface 810 is configured for one end of the first connection assembly 9, and the other end of the first connection assembly 9 is adapted to be connected to the battery pack 600, thereby enabling the controller 800 to be connected to the battery pack 600. The A-wire 801 extends from the motor 700 through the controller 800 to the middle of the first sub-battery pack and the second sub-battery pack of the battery pack 600 that are connected in series. Therefore, in some embodiments, the first connection assembly 9 preferably includes an A-wire conductor segment 813 corresponding to the first A-wire 814, a positive direct current bus conductor segment 823 corresponding to the positive direct current bus 807, and a negative direct current bus conductor segment 833 corresponding to the negative direct current bus 808.

In some embodiments, a first end of the A-wire conductor segment 813 is at least indirectly connected to the controller 800, and a second end of the A-wire conductor segment 813 is at least indirectly connected to the middle of the first sub-battery pack U1 and the second sub-battery pack U2 connected in series. A first end of the positive direct current bus conductor segment 823 is at least indirectly connected to the controller 800, and a second end of the positive direct current bus conductor segment 823 is at least indirectly connected to the positive electrode (the positive direct current bus 807) of the battery pack 600. A first end of the negative direct current bus conductor segment 833 is at least indirectly connected to the controller 800, and a second end of the negative direct current bus conductor segment 833 is at least indirectly connected to the negative electrode (the negative direct current bus 808) of the battery pack 600.

In some embodiments, the first end of the A-wire conductor segment 813 is connected to the first A-wire connection terminal 811. The first A-wire connection terminal 811 is connected to the controller 800. In other words, two ends of the first A-wire connection terminal 811 are respectively connected to the controller 800 and the first end of the A-wire conductor segment 813. In some embodiments, the controller 800 is provided with an A-wire support position 59, configured to at least indirectly detachably connect to the first end of the A-wire conductor segment 813. The first plug interface 810 is configured to insert the first end of the A-wire conductor segment 813 directly or indirectly. In some embodiments, the first A-wire connection terminal 811 is directly detachably mounted in the A-wire support position 59 after being inserted into the first plug interface 810. Therefore, the first plug interface 810 is configured to insert the A-wire conductor segment 813 through the first A-wire connection terminal 811, and the first A-wire connection terminal 811 is detachably connected to the A-wire support position 59. The second end of the A-wire conductor segment 813 is connected to the second A-wire connection terminal 812 (the A-wire connection terminal of the battery pack), and is connected, through the second A-wire connection terminal 812, to the middle of the first sub-battery pack U1 and the second sub-battery pack U2 that are connected in series. It will be understood that the first A-wire connection terminal 811, the A-wire conductor segment 813, and the second A-wire connection terminal 812 form a segment of the A-wire 801, that is, form the first A-wire 814. In the controller 800, all electrical parts that are equipotentially connected to the A-wire support position 59 are electrical parts on the A-wire 801.

In some embodiments, the first end of the positive direct current bus conductor segment 823 is connected to a first positive direct current bus connection terminal 821. The first positive direct current bus connection terminal 821 is connected to the controller 800. In other words, two ends of the first positive direct current bus connection terminal 821 are respectively connected to the controller 800 and the first end of the positive direct current bus conductor segment 823. In some embodiments, the controller 800 is provided with a positive direct current bus support position 58A, configured to at least indirectly detachably connect to the first end of the positive direct current bus conductor segment 823 A positive direct current bus connection terminal 58 is disposed at a position of the positive direct current bus support position 58A. The first positive direct current bus connection terminal 821 is directly detachably connected to the positive direct current bus connection terminal 58 after being inserted into the first plug interface 810. The second end of the positive direct current bus conductor segment 823 is connected to the second positive direct current bus connection terminal 822 (the positive direct current bus connection terminal of the battery pack), and is at least indirectly connected to the positive electrode of the battery pack 600 through the second positive direct current bus connection terminal 822. It will be understood that the first positive direct current bus connection terminal 821, the positive direct current bus conductor segment 823, and the second positive direct current bus connection terminal 822 form at least a part of the positive direct current bus 807. The positive direct current bus connection terminal 58 is a positive direct current bus terminal of the controller 800, and is configured to connect to the positive direct current bus 807, that is, the positive electrode of the battery pack 600.

In some embodiments, the first end of the negative direct current bus conductor segment 833 is connected to a first negative direct current bus connection terminal 831. The first negative direct current bus connection terminal 831 is connected to the controller 800. In other words, two ends of the first negative direct current bus connection terminal 831 are respectively connected to the controller 800 and the first end of the negative direct current bus conductor segment 833. For example, the controller 800 is provided with a negative direct current bus support position 60A, configured to at least indirectly detachably connect to the first end of the negative direct current bus conductor segment 833. A negative direct current bus connection terminal 60 is disposed at a position of the negative direct current bus support position 60A. The first negative direct current bus connection terminal 831 is directly detachably connected to the negative direct current bus connection terminal 60 after being inserted into the first plug interface 810. The second end of the negative direct current bus conductor segment 833 is connected to the second negative direct current bus connection terminal 832 (the negative direct current bus connection terminal of the battery pack), and is at least indirectly connected to the negative electrode of the battery pack 600 through the second negative direct current bus connection terminal 832. It will be understood that the first negative direct current bus connection terminal 831, the negative direct current bus conductor segment 833, and the second negative direct current bus connection terminal 832 form at least a part of the negative direct current bus 808. The negative direct current bus connection terminal 60 is a negative direct current bus terminal of the controller 800, and is configured to connect to the negative direct current bus 808, that is, the negative electrode of the battery pack 600.

In some embodiments, the first A-wire connection terminal 811, the first positive direct current bus connection terminal 821, and the first negative direct current bus connection terminal 831 are located at an end of the first connection assembly 9 that is configured to connect to the controller 800. The second A-wire connection terminal 812, the second positive direct current bus connection terminal 822, and the second negative direct current bus connection terminal 832 are located at an end of the first connection assembly 9 that is configured to connect to the battery pack 600.

In some embodiments, the first A-wire connection terminal 811 is located between the first positive direct current bus connection terminal 821 and the first negative direct current bus connection terminal 831. In some embodiments, the A-wire conductor segment 813 is disposed between the positive direct current bus conductor segment 823 and the negative direct current bus conductor segment 833. In some embodiments, the first plug interface 810 is disposed on the first connector socket 809, and the first connector socket 809 is disposed on the box 10. The first magnetic ring 93 surrounds the first plug interface 810 on a periphery of the first plug interface 810.

In some embodiments, the end of the first connection assembly 9 that is configured to connect to the controller 800 forms a first plug connector 9A, and the first plug connector 9A is inserted into the plug interface 810 and the first magnetic ring 93. Therefore, the first A-wire connection terminal 811, the first positive direct current bus connection terminal 821, and the first negative direct current bus connection terminal 831 jointly pass through the plug interface 810 and the first magnetic ring 93, that is, the first A-wire and the direct current bus jointly pass through the plug interface 810 and the first magnetic ring 93, that is, the A-wire 801 and the direct current bus jointly pass through the first magnetic ring 93. In some embodiments, the first A-wire connection terminal 811, the first positive direct current bus connection terminal 821, and the first negative direct current bus connection terminal 831 pass through the plug interface 810 and the first magnetic ring 93 in parallel with each other.

The first A-wire connection terminal 811 will be understood as a plug connector A-wire connection terminal of the plug connector 9A. The first positive direct current bus connection terminal 821 will be understood as a plug connector positive direct current bus connection terminal of the plug connector 9A. The first negative direct current bus connection terminal 831 will be understood as a plug connector negative direct current bus connection terminal of the plug connector 9A. The first positive direct current bus connection terminal 821 will be understood as an end of the direct current bus that is configured to connect to the controller 800. Therefore, the first A-wire and the end of the direct current bus that is configured to connect to the controller 800 are fastened in the plug connector 9A.

It will be understood that, on a side of the battery pack 600, a connector socket may also be disposed on the housing of the battery pack 600, a plug interface is disposed on the connector socket, a second magnetic ring 94 (referring to FIG. 2) is disposed on a periphery of the plug interface, and a plug connector formed by the second A-wire connection terminal 812, the second positive direct current bus connection terminal 822, and the second negative direct current bus connection terminal 832 passes through the second magnetic ring 94, forming a case similar to a case in which the plug connector 9A is inserted into the plug interface 810. In other words, the second positive direct current bus connection terminal 822, the second A-wire connection terminal 812, and the second negative direct current bus connection terminal 832 jointly pass through the second magnetic ring 94. The second A-wire connection terminal 812 is located between the second positive direct current bus connection terminal 822 and the second negative direct current bus connection terminal 832. The second A-wire connection terminal 812 is disposed in parallel with the second positive direct current bus connection terminal 822 and the second negative direct current bus connection terminal 832.

This application may alternatively be constructed as follows: The A-wire conductor segment 813, the positive direct current bus conductor segment 823, and the negative direct current bus conductor segment 833 jointly pass through a magnetic ring.

In some embodiments, lengths of the A-wire conductor segment 813, the positive direct current bus conductor segment 823, and the negative direct current bus conductor segment 833 are substantially the same or similar. For example, lengths of the A-wire conductor segment 813, the positive direct current bus conductor segment 823, and the negative direct current bus conductor segment 833 are the same between the first plug connector 9A and the second plug connector 9B. In some embodiments, wire diameters of the A-wire conductor segment 813, the positive direct current bus conductor segment 823, and negative direct current bus conductor segment 833 are substantially the same or similar. This setting helps make inductance of the A-wire conductor segment 813, the positive direct current bus conductor segment 823, and the negative direct current bus conductor segment 833 the same.

The A-wire conductive assembly 860 is disposed in the box 10, so that the controller 800 is applicable to both a vehicle with a battery pack self-heating function and a vehicle without the battery pack self-heating function.

In some implementations, if the vehicle has the battery pack self-heating function, the A-wire 801 extends from the second end of the motor winding 701 to the middle of the first sub-battery pack U1 and the second sub-battery pack U2. Therefore, a second end 862 of the A-wire conductive assembly is at least indirectly connected to the second end of the at least one phase of winding 701, and a first end 861 of the A-wire conductive assembly is at least indirectly connected between the first sub-battery pack and the second sub-battery pack that are connected in series. To be specific, when the second end 862 of the A-wire conductive assembly is at least indirectly connected to the second end of the at least one phase of winding 701, the first end 861 of the A-wire conductive assembly is at least indirectly connected to the middle of the first sub-battery pack and the second sub-battery pack that are connected in series; or when the first end 861 of the A-wire conductive assembly is at least indirectly connected between the first sub-battery pack and the second sub-battery pack that are connected in series, the second end 862 of the A-wire conductive assembly is at least indirectly connected to the second end of the at least one phase of winding 701.

In some implementations, if the vehicle does not have the battery pack self-heating function, two ends of the A-wire conductive assembly 860 of the controller 800 are no longer connected to the battery pack 600 and the motor 700. To be specific, the second end 862 of the A-wire conductive assembly is not connected to the motor 700, and the first end 861 of the A-wire conductive assembly is not connected to the middle of the first sub-battery pack and the second sub-battery pack that are connected in series; or when the second end 862 of the A-wire conductive assembly is not connected to the motor 700, the first end 861 of the A-wire conductive assembly is not connected to the battery pack 600; or when the first end 861 of the A-wire conductive assembly is not connected to the battery pack 600, the second end 862 of the A-wire conductive assembly is not connected to the motor 700.

The following continues to describe the controller 800 and an embodiment of how the controller 800 is connected to a charging device.

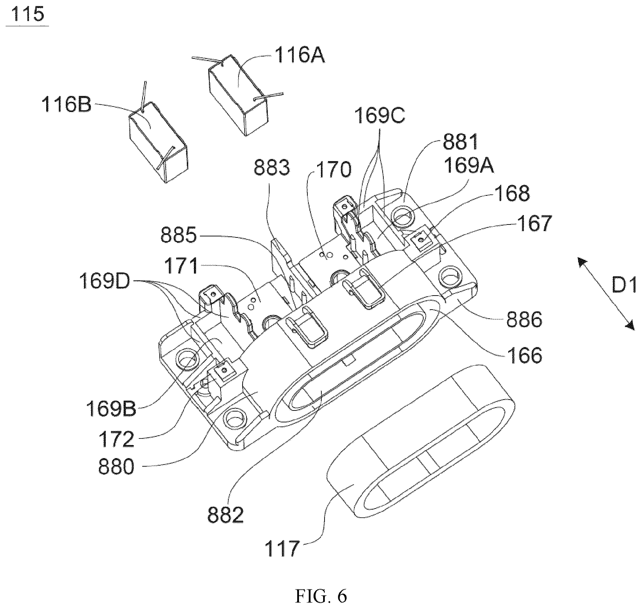

As described above, the controller 800 is connected to the charging device through the second connection assembly 4. In some embodiments, as shown in FIG. 3 and FIG. 6, a charging connector socket 115 is disposed in the box 10 of the controller 800, and a plug of the second connection assembly 4 is inserted into a power jack 882 (charging interface) of the charging connector socket 115. The charging connector socket 115 includes a positive charging connection terminal 170 and a negative charging connection terminal 171.

As shown in FIG. 6, in this application, the charging connector socket 115 is also referred to as a magnetic ring seat assembly 115. In some embodiments, the charging connector socket 115 includes an insulating substrate 881, a first capacitor mounting slot 169A, and a first magnetic ring seat capacitor 116A. In some embodiments, the first capacitor mounting slot 169A is configured to accommodate the first magnetic ring seat capacitor 116A. The first magnetic ring seat capacitor 116A preferably has a cuboid shape. It will be understood that the first magnetic ring seat capacitor 116A has at least three first capacitor side walls. The first capacitor mounting slot 169A has at least three first slot side walls 169C, and the three first slot side walls 169C and the three first capacitor side walls are undetachably connected in a one-to-one correspondence. For example, the side walls of the first magnetic ring seat capacitor 116A are correspondingly bonded to the three first slot side walls 169C, and mounting of the first magnetic ring seat capacitor 116A on the magnetic ring seat assembly is very firmly.

As shown in FIG. 6, in some embodiments, the magnetic ring seat assembly 115 further includes a power socket 880.

As shown in FIG. 6, in some embodiments, the magnetic ring seat assembly 115 further includes a third magnetic ring 117.

As shown in FIG. 6, in some embodiments, the magnetic ring seat assembly 115 further includes a second magnetic ring seat capacitor 116B.

As shown in FIG. 6, in some embodiments, the substrate 881 is provided with a positive connection terminal 170 for connecting to a positive electrode of a charging power supply, a negative connection terminal 171 for connecting to a negative electrode of the charging power supply, and a ground terminal for connecting to a ground wire. The ground terminal includes a first ground terminal 168 and a second ground terminal 172 that are short-circuited to each other.

As shown in FIG. 6, in some embodiments, the power socket 880 is disposed on the substrate 881 for connecting (accommodating) to an external power plug (that is, the plug of the charging device). The power socket 880 includes the power jack 882 and a magnetic ring mounting slot 166. The power jack 882 is configured to accommodate the external power plug. The power jack 882 penetrates the power socket 880 in a first direction D1. The power socket 880 includes a first socket side 885 and a second socket side 886 that are disposed opposite to each other in the first direction D1, and the external power plug is configured to insert into the power jack 882 from the second socket side 886. In other words, the second socket side 886 is an outer side configured to face an external device, and the first socket side 885 is an inner side. In some embodiments, the magnetic ring mounting slot 166 is disposed in the power socket 880 and surrounds the power jack 882 on a periphery of the power jack 882. In some embodiments, an outer surface of the magnetic ring mounting slot 166 is connected to the substrate 881. In some embodiments, the substrate 881 and the power socket 880 may be formed integrally, for example, formed in one step by using an injection molding method. In some embodiments, the substrate 881 is parallel with an axis (that is, the first direction D1) of the power jack 882. On a side of the magnetic ring seat assembly 115 that is configured to face the external power plug, an end surface of the power jack 882 is flush with an end surface of the substrate 881, or the end surface of the power jack 882 protrudes from the end surface of the substrate 881. In other words, the second socket side 886 is flush with the end surface of the substrate 881 in the first direction D1, or the second socket side 886 protrudes from the substrate 881 in the first direction D1.

As shown in FIG. 6, in some embodiments, the third magnetic ring 117 is disposed in the magnetic ring mounting slot 166, for example, bonded in the magnetic ring mounting slot 166.

As shown in FIG. 6, in some embodiments, a second capacitor mounting slot 169B is further disposed on the substrate 881. The second capacitor mounting slot 169B is configured to accommodate the second magnetic ring seat capacitor 116B. The second magnetic ring seat capacitor 116B preferably has a cuboid shape. It will be understood that the second magnetic ring seat capacitor 116B has at least three second capacitor side walls. The second capacitor mounting slot 169B has at least three second slot side walls 169D, and the three second slot side walls 169D and the three second capacitor side walls are undetachably connected in a one-to-one correspondence. For example, the side walls of the second magnetic ring seat capacitor 116B are correspondingly bonded to the three second slot side walls 169D. In some embodiments, the first capacitor mounting slot 169A and the second capacitor mounting slot 169B are disposed symmetrically with respect to the axis of the power jack 882, so that the first magnetic ring seat capacitor 116A and the second magnetic ring seat capacitor 116B are disposed symmetrically with respect to the axis of the power jack 882.

As shown in FIG. 6, in some embodiments, the first magnetic ring seat capacitor 116A may further be undetachably connected to the substrate 881, for example, bonded to the substrate 881. A first capacitor pin of the first magnetic ring seat capacitor 116A is electrically connected to the positive connection terminal 170, and a second capacitor pin is electrically connected to a ground terminal, for example, the first ground terminal 168. The second magnetic ring seat capacitor 116B may also be undetachably connected to the substrate 881, for example, bonded to the substrate 881. A first capacitor pin of the second magnetic ring seat capacitor 116B is electrically connected to the negative connection terminal 171, and a second capacitor pin is electrically connected to a ground terminal, for example, the second ground terminal 172. The first magnetic ring seat capacitor 116A and the second magnetic ring seat capacitor 116B may be configured as Y capacitors. In some embodiments, a length direction of the first magnetic ring seat capacitor 116A is parallel with an axial direction (that is, the first direction D1) of the power jack 882, and/or a length direction of the second magnetic ring seat capacitor 116B is parallel with the axial direction of the power jack 882.

As shown in FIG. 6, in some embodiments, a bottom wall of the magnetic ring mounting slot 166 is disposed on the first socket side 885, that is, the magnetic ring mounting slot 166 is not a through slot extending in the first direction D1, and has a blind end on the first socket side 885. In some embodiments, both the first magnetic ring seat capacitor 116A and the second magnetic ring seat capacitor 116B are disposed adjacent to the first socket side 885. In some embodiments, the side wall of the first magnetic ring seat capacitor 116A abuts against the first socket side 885, and the side wall of the second magnetic ring seat capacitor 116B also abuts against the first socket side 885, so that four sides of each of the first magnetic ring seat capacitor 116A and the second magnetic ring seat capacitor 116B are limited, enabling the first magnetic ring seat capacitor 116A and the second magnetic ring seat capacitor 116B to be firmly mounted.

As shown in FIG. 6, in some embodiments, the positive connection terminal 170 and the negative connection terminal 171 are also symmetrically disposed with respect to the axis of the power jack 882, and the first ground terminal 168 and the second ground terminal 172 are also symmetrically disposed with respect to the axis of the power jack 882, so that the magnetic ring seat assembly 115 has a symmetrical structure as a whole. For example, the positive connection terminal 170 and the first ground terminal 168 are respectively located on two sides of the first capacitor mounting slot 169A (that is, the first magnetic ring seat capacitor 116A), and the negative connection terminal 171 and the second ground terminal 172 are respectively located on two sides of the second capacitor mounting slot 169B (that is, the second magnetic ring seat capacitor 116B).

As shown in FIG. 6, in some embodiments, the magnetic ring seat assembly 115 further includes a partition wall 883. The partition wall 883 is disposed on the substrate 881 and protrudes from the substrate 881. The partition wall 883 and the power socket 880 are located on a same side of the substrate 881. The partition wall 883 extends in the axis direction of the power jack 882 to separate positive and negative electrodes of the external power plug. The positive connection terminal 170 and the negative connection terminal 171 are respectively located on two sides of the partition wall 883. The partition wall 883 is considered as being disposed at a position of a symmetrical axis of the magnetic ring seat assembly 115. It will be understood that the partition wall 883 is made of an insulating material. In some embodiments, the partition wall 883 is formed integrally with the substrate 881. In some embodiments, the partition wall 883, the substrate 881, and the socket 880 are integrally formed.

As shown in FIG. 6, in some embodiments, the magnetic ring seat assembly 115 further includes at least one wire harness clamping part 167, and the wire harness clamping part 167 is disposed on an outer surface of the magnetic ring mounting slot 166, and is configured to hold the harness.

Because the capacitor 116A, the capacitor 116B, and the magnetic ring 117 are all mounted through bonding, the magnetic ring seat assembly 115 becomes an integrated charging connector socket, which facilitates automatic production.

The magnetic ring seat assembly 115 is configured to be mounted to the box 10, for example, the substrate 881 is connected to the box 10, so that the power jack 882 is exposed from the box 10, enabling the second connection assembly 4 to be inserted into the power jack 882, to connect the controller 800 and the charging device. In some embodiments, when the drive system 890 is mounted in a vehicle, the axis of the power jack 882 is parallel with an axis of a wheel, so that the plug of the charging device is inserted from a side wall (one side of a vehicle door) of the vehicle.

In some embodiments, the first connector socket 809 and the magnetic ring seat assembly 115 are disposed on a same side wall of the box 10, that is, the first connection assembly 9 and the second connection assembly 4 are connected to a same side of the box 10.

The following continues to describe the controller 800 and some embodiments of a connection between the controller 800 and the motor 700.

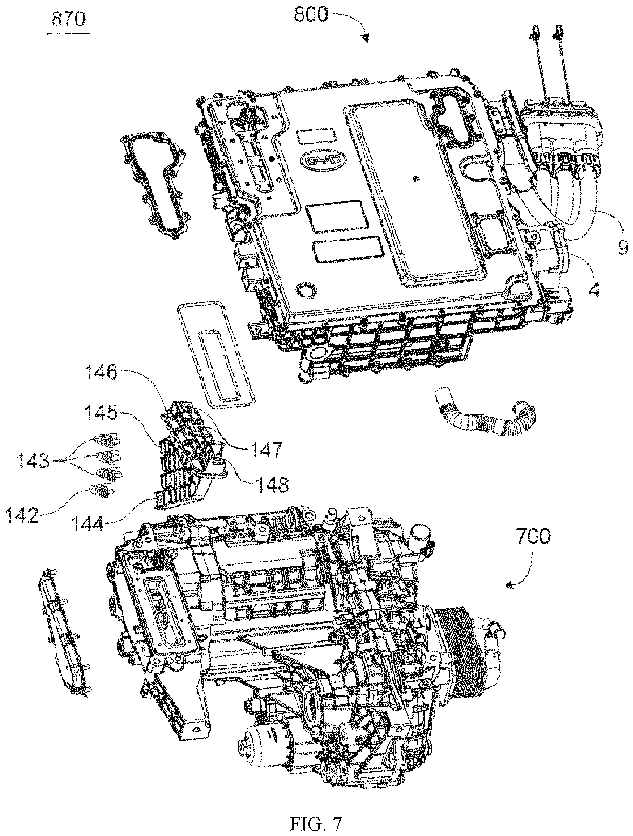

As shown in FIG. 3, a first terminal seat 99 is disposed on the controller 800. As shown in FIG. 7, a motor terminal seat 146 is disposed on the motor 700, and the first terminal seat 99 is configured to connect to the motor terminal seat 146, to connect the controller 800 and the motor 700.

In some embodiments, the connection between the controller 800 and the motor 700 includes a connection to the A-wire 801 and a connection to a first end of the three-phase winding 701, that is, the controller 800 is separately connected to the first end and the second end of the three-phase winding 701.

In some embodiments, as shown in FIG. 7, the motor terminal seat 146 includes a motor A-wire connection terminal 144, an electrical control A-wire connection terminal 148, a motor three-phase connection terminal 145, and an electrical control three-phase connection terminal 147. Inside the motor 700, the second end of the three-phase winding 701 is first converged in the motor 700, and then connected to a motor A-wire terminal 142. The motor A-wire terminal 142 is connected to the motor A-wire connection terminal 144 of the motor terminal seat 146. Inside the motor terminal seat 146, the motor A-wire connection terminal 144 is connected to the electrical control A-wire connection terminal 148. The first end of the three-phase winding 701 is connected to a motor three-phase terminal 143, and the motor three-phase terminal 143 is connected to the motor three-phase connection terminal 145 of the motor terminal seat 146. The motor three-phase connection terminal 145 of the motor terminal seat 146 is correspondingly connected to the electrical control three-phase connection terminal 147 of the motor terminal seat 146.

As shown in FIG. 3, a three-phase connection terminal 101 of the first terminal seat is disposed on the first terminal seat 99. The electrical control three-phase connection terminal 147 is configured to connect to the three-phase connection terminal 101 of the first terminal seat. The electrical control A-wire connection terminal 148 is connected to the second end 862 (referring to FIG. 3) of the A-wire conductive assembly 860 of the A-wire 801 in the controller 800. The second end 862 of the A-wire conductive assembly is disposed on the first terminal seat 99, so that the first terminal seat 99 provides support to the second end 862 of the A-wire conductive assembly. In addition, the three-phase connection terminal 101 of the first terminal seat is close to the second end 862 of the A-wire conductive assembly, which is convenient for a connection to a corresponding terminal of the motor 700.

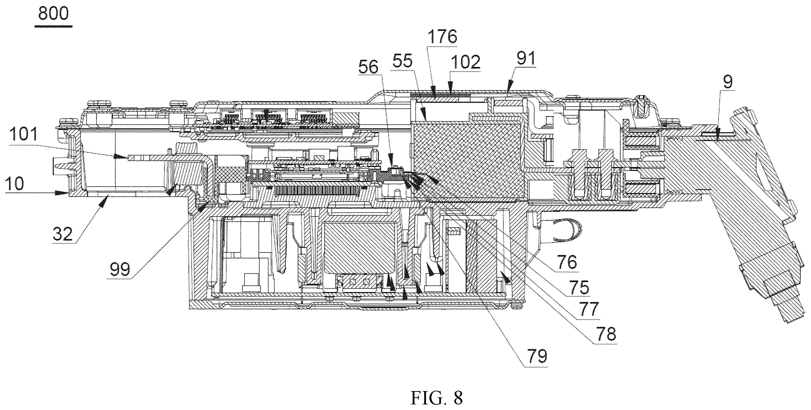

As shown in FIG. 8, a second opening 32 is provided on the box 10, and the second opening 32 is disposed adjacent to the first terminal seat 99, so that the three-phase connection terminal 101 of the first terminal seat and the second end 862 of A-wire conductive assembly are connected to the motor 700. For example, the motor terminal seat 146 may directly enter the interior of the box 10 from the second opening 32 to connect to a terminal at the first terminal seat 99.

The second opening 32 is used for the second end 862 of the A-wire conductive assembly to directly or indirectly pass through to be connected to the motor 700. In this application, that the second end 862 of the A-wire conductive assembly indirectly passes through the second opening 32 means that a current flowing through the second end 862 of the A-wire conductive assembly passes through the second opening 32.

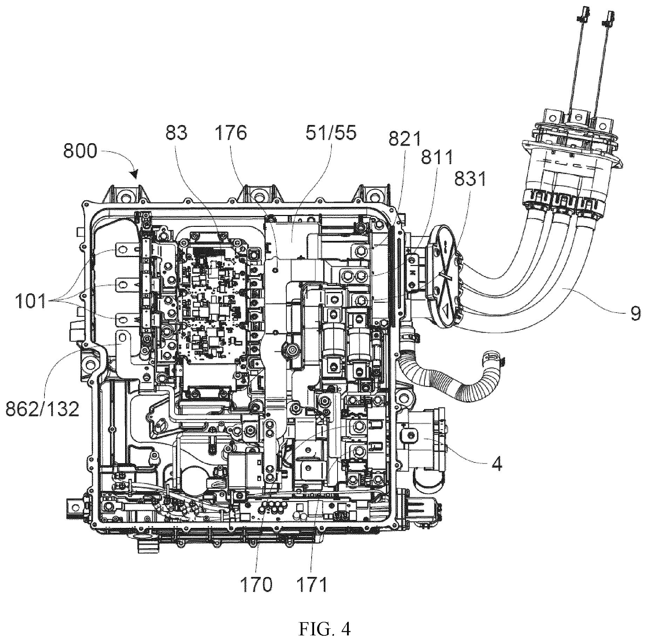

In some embodiments, the three-phase connection terminal 101 of the first terminal seat and the second end 862 of the A-wire conductive assembly are disposed side by side (referring to FIG. 4), and the electrical control three-phase connection terminal 147 and the electrical control A-wire connection terminal 148 are disposed side by side.

The following continues to describe some embodiments of the controller 800, especially a relationship between the controller 800 and the A-wire 801.

As shown in FIG. 3, the controller 800 includes the power module 83 and the A-wire conductive assembly 860. The power module 83 and the A-wire conductive assembly 860 are disposed in the box 10. The A-wire conductive assembly 860 is also a part of the A-wire 801 in the controller 800.

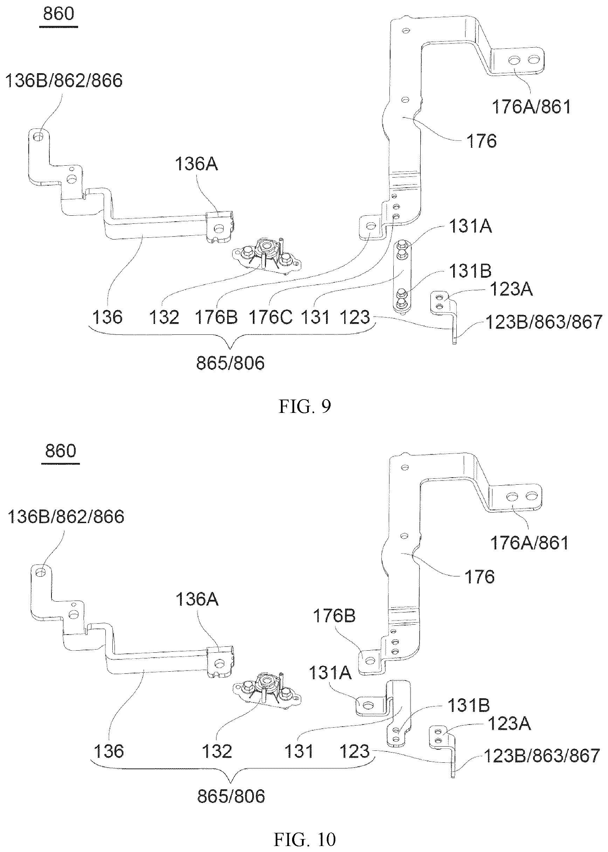

As shown in FIG. 3 and FIG. 9, the A-wire conductive assembly 860 includes the first end 861 of the A-wire conductive assembly and the second end 862 of the A-wire conductive assembly. The first end 861 of the A-wire conductive assembly is configured to at least indirectly connect to the middle of the first sub-battery pack U1 and the second sub-battery pack U2 that are connected in series in the battery pack 600. The second end 862 of the A-wire conductive assembly is configured to at least indirectly connect to the second end of the at least one phase of winding 701 of the motor 700. In some embodiments, the second end 862 of the A-wire conductive assembly is configured to at least indirectly connect to the second end of the three-phase winding 701 of the motor 700.

It will be understood that the first plug interface 810 is used for the first end 861 of the A-wire conductive assembly to directly or indirectly pass through to be connected to the battery pack 600. In this application, that the first end 861 of the A-wire conductive assembly indirectly passes through the first plug interface 810 means that a current flowing through the first end 861 of the A-wire conductive assembly passes through the first plug interface 810.

In some embodiments, the A-wire conductive assembly includes the first A-wire conductive member 176 and the second A-wire conductive member 136. The first A-wire conductive member 176 has a first end 176A of the first A-wire conductive member and a second end 176B of the first A-wire conductive member, and the first end 176A of the first A-wire conductive member is the first end 861 of the A-wire conductive assembly. The second A-wire conductive member 136 has a first end 136A of the second A-wire conductive member and a second end 136B of the second A-wire conductive member, the first end 136A of the second A-wire conductive member is connected to the second end 176B of the first A-wire conductive member, and the second end 136B of the second A-wire conductive member is the second end 862 of the A-wire conductive assembly. In some embodiments, the second end 176B of the first A-wire conductive member is connected to the first end 136A of the second A-wire conductive member through a fixed seat 132. The fixed seat 132 generally uses an insulating member, and is configured to support the first A-wire conductive member 176 and the second A-wire conductive member 136, to reduce shaking of the first A-wire conductive member 176 and the second A-wire conductive member 136 in the controller box 10, and improve reliability of the controller 800.

Specifically, as shown in FIG. 3, as described above, the controller 800 is provided with the A-wire support position 59, and the A-wire support position 59 is configured to at least indirectly connected to the middle of the first sub-battery pack U1 and the second sub-battery pack U2 that are connected in series in the battery pack 600. For example, the first end 176A of the first A-wire conductive member is fixedly mounted to the A-wire support position 59, that is, the first end 861 of the A-wire conductive assembly is fastened to the A-wire support position 59, and is connected to the first A-wire connection terminal 811, so that the A-wire of the first connection assembly 9 is connected to the middle of the first sub-battery pack U1 and the second sub-battery pack U2.

With reference to FIG. 2, it will be understood that the controller 800 is connected to the first end of the three-phase winding 701 of the motor 700, and is further connected to the second end (that is, an end point of the A-wire in the motor) of the three-phase winding 701. The second end 136B of the second A-wire conductive member is connected to a first terminal seat A-wire connection terminal 802 of the first terminal seat 99, to connect to the second end of the winding 701.

Therefore, the drive system 890 implements a connection from the motor 700 to the A-wire of the battery pack 600 through the controller 800.

In some embodiments, the A-wire conductive assembly 860 further includes a third end 863 of the A-wire conductive assembly, and the third end 863 of the A-wire conductive assembly is at least indirectly connected to the positive charging connection terminal 170. For example, the A-wire conductive assembly 860 further includes the third A-wire conductive member 123, and the third A-wire conductive member 123 is configured to connect the second A-wire conductive member 136 and the positive charging conductor. In this embodiment, the third A-wire conductive member 123 is mainly configured to boost a charging condition. In this design, the second A-wire conductive member 136 can be reused, and a part of copper bars can be reduced, so that the controller 800 has higher integration, and costs can also be saved.

In some embodiments, as shown in FIG. 9, the third A-wire conductive member 123 has a first end 123A of the third A-wire conductive member and a second end 123B of the third A-wire conductive member. The first A-wire conductive member 176 further includes a third end 176C of the first A-wire conductive member. The third end 176C of the first A-wire conductive member is preferably disposed close to the second end 176B of the first A-wire conductive member. The first end 123A of the third A-wire conductive member is connected to the third end 176C of the first A-wire conductive member. The second end 123B of the third A-wire conductive member is the third end 863 of the A-wire conductive assembly. In some embodiments, the A-wire conductive assembly 860 further includes a fourth A-wire conductive member 131. The fourth A-wire conductive member 131 includes a first end 131A of the fourth A-wire conductive member and a second end 131B of the fourth A-wire conductive member. Two ends of the fourth A-wire conductive member 131 are respectively connected to the third end 176C of the first A-wire conductive member and the first end 123A of the third A-wire conductive member.

In some other embodiments, as shown in FIG. 10, the first end 123A of the third A-wire conductive member is connected to the first end 136A of the second A-wire conductive member. The two ends of the fourth A-wire conductive member 131 are respectively connected to the first end 136A of the second A-wire conductive member and the first end 123A of the third A-wire conductive member, so that the first end 123A of the third A-wire conductive member is connected to the first end 136A of the second A-wire conductive member.

In some embodiments, the first switching element 122 is disposed in the box 10, and a second end of the first switching element 122 is connected to the second end 123B of the third A-wire conductive member. The second end of the first switching element 122 is connected to the positive charging connection terminal 170. Therefore, the third end 863 of the A-wire conductive assembly is connected to the positive charging connection terminal 170 through the first switching element 122.

In some embodiments, the first A-wire conductive member 176, the second A-wire conductive member 136, the third A-wire conductive member 123, and the fourth A-wire conductive member 131 are all constructed as copper bars, and the four conductive members are equipotentially connected. It will be understood that the fixed seat 132 is also equipotentially connected to the four conductive members.

As shown in FIG. 3, in some embodiments, the controller 800 further includes a capacitor assembly 55, where the capacitor assembly 55 includes an insulating base 911, the A-wire support position 59 is disposed on the insulating base 911, and the A-wire support position 59 is disposed adjacent to the first plug interface 810. In this way, a separate A-wire support position may be omitted, so that integration of the controller 800 is higher, and costs can be saved.

In some embodiments, the first end 176A of the first A-wire conductive member is detachably connected to the A-wire support position 59. A span of the A-wire conductive assembly 860 in the box 10 is relatively large. In some embodiments, the A-wire conductive assembly 860 is at least partially disposed in a capacitor housing 51 of the capacitor assembly 55 (referring to FIG. 3 to FIG. 5). For example, the first A-wire conductive member 176 is disposed above the capacitor housing 51. The capacitor housing 51 has an insulation property. In this way, the capacitor assembly 55 can provide support to the A-wire conductive assembly 860, to reduce insulating support members of the A-wire conductive assembly 860, thereby further improving integration of the controller 800, and further saving costs.

In some embodiments, the first A-wire conductive member 176 is adhered to the capacitor housing 51 of the capacitor assembly 55. The A-wire 801 may be used for self-heating of the battery pack 600, and may also be used for boost charging of the battery pack 600. In a self-heating process, a current passing through the A-wire 801 may reach up to 500 A, and a relatively large amount of heat is generated. In other words, a relatively large current passes through the first A-wire conductive member 176, and a relatively large amount of heat is generated. If the heat cannot be dissipated in time, the heat significantly affects the capacitor assembly and may even cause the capacitor assembly 55 to explode.

To resolve a problem that reliability the capacitor assembly 55 is low because the first A-wire conductive member 176 is disposed on the capacitor assembly 55, a heat-conducting member 102 is further disposed in the box 10. The heat-conducting member 102 is disposed between the first A-wire conductive member 176 and an inner wall of the box 10 of the controller 800. The heat-conducting member 102 is configured as, for example, a heat-conducting slurry. The box 10 of the controller 800 is generally made of metal, and a heat conduction effect of the metal is good. In this way, heat generated by the first A-wire conductive member 176 can be transferred out of the box 10 in time.

In some embodiments, the controller 800 further includes an insulating member 91. The insulating member 91 is disposed between the heat-conducting member 102 and the inner wall of the box 10, and insulates the first A-wire conductive member 176 from the box 10 made of a metal material.

In some embodiments, as shown in FIG. 8, an upper surface of the insulating member 91 is in contact with a lower surface of an upper cover of the box 10, a lower surface of the insulating member 91 in contact with an upper surface of the heat-conducting member 102, and a lower surface of the heat-conducting member 102 is in contact with the A-wire conductive assembly 860 (for example, an upper surface of the first A-wire conductive member 176).

As shown in FIG. 3, in some embodiments, the insulating member 91 and the heat-conducting member 102 have a same cross-sectional shape. For example, in a projection in an up-down direction, the insulating member 91 has a same shape as the heat-conducting member 102, and has a substantially same shape as the first A-wire conductive member 176. The three members are matched, to achieve effects of effective heat dissipation, effective insulation, and material saving.

The following describes composition of a positive circuit path during boost charging in the controller 800.

With reference to FIG. 2 and FIG. 3, the positive charging conductor is connected to the second end of the winding 701 through a first contactor 122. A second conductive assembly 806 is disposed in the controller 800, and the second conductive assembly 806 includes the first contactor 122. A first end of the second conductive assembly 806 is disposed in the charging connector socket 115, and is configured to connect to the positive electrode of the charging device. A second end of the second conductive assembly 806 is connected to the second end of the at least one phase of winding 701. In some embodiments, the second end of the second conductive assembly 806 is connected to the second end of the three-phase winding 701.

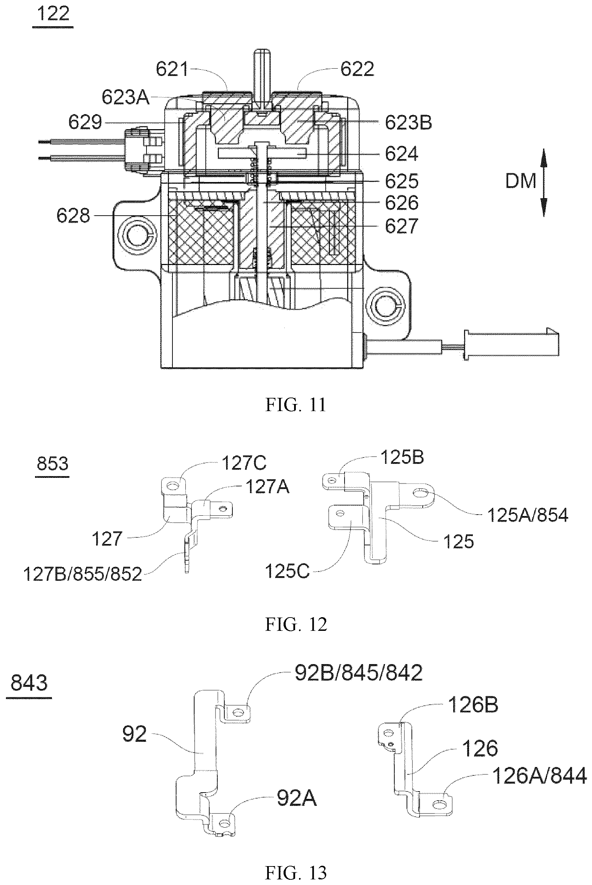

First, an operating principle of the first contactor 122 is described with reference to FIG. 11. The first contactor 122 is provided with a first contactor contact 621 and a second contactor contact 622, and a moving plate 624 that connects or disconnects the first contactor contact 621 and the second contactor contact 622. Specifically, the contacts 621 and 622 are exposed to a surface of the contactor 122, and the two respectively extend to the interior of the contactor 122 through respective terminal posts 623A and 623B. A magnet 629 and a coil 628 are disposed at intervals in a moving direction DM. The coil 628, a connecting shaft 626, and the moving plate 624 are fixedly connected, and the three may move synchronously in the moving direction DM. A limiting post 627 is an internal fastening part of the contactor 122, and a spring 625 is connected between the limiting post 627 and the moving plate 624. When the contactor 122 is powered on, the coil 628 is energized to generate magnetism and is attracted by the magnet 629. Therefore, the coil 628 drives, through the connecting shaft 626, the moving plate 624 to move toward the magnet 629 in the moving direction DM, causing the moving plate 624 to be in contact with the terminal posts 623A and 623B, to connect the contacts 621 and 622. In this case, the spring 625 is stretched. After power is cut off, restoring force of the spring 625 pulls the moving plate 624 away from the two terminal posts 623A and 623B, causing the two contacts 621 and 622 to be disconnected, and the coil 628 to return an original position.

In this application, in some embodiments, the moving direction DM of the moving plate 624 of the first contactor 122 is parallel with an axial direction of a wheel shaft, or the moving direction of the moving plate 624 is perpendicular to a driving direction of a vehicle. This brings an advantage of preventing the contactor 122 from being erroneously engaged due to inertial force caused by sudden acceleration/deceleration or a bumpy road condition during driving of the vehicle. A current is conducted to the motor 700 when the contactor 122 is engaged. Therefore, if the contactor 122 is erroneously engaged, the second connection assembly 4 becomes electrified, causing an electric shock risk to a vehicle user.

In some embodiments, the second conductive assembly 806 includes a positive conductive assembly 850, the first contactor 122, and an additional positive conductive assembly 865. As shown in FIG. 3 and FIG. 12, the positive conductive assembly 850 includes a first end 851 of the positive conductive assembly and a second end 852 of the positive conductive assembly. The first end 851 of the positive conductive assembly is connected to the positive electrode of the charging device, and the second end 852 of the positive conductive assembly is connected to the first contactor contact 621. As shown in FIGs. 3 and 9, the additional positive conductive assembly 865 includes a first end 866 of the additional positive conductive assembly and a second end 867 of the additional positive conductive assembly. The first end 866 of the additional positive conductive assembly is connected to the second end of the at least one phase of winding 701, and the second end 867 of the additional positive conductive assembly is connected to the second contactor contact 622.

In some embodiments, the positive conductive assembly 850 includes the positive charging connection terminal 170 and a sub-positive conductive assembly 853. The positive charging connection terminal 170 is disposed in the charging connector socket 115, is configured to connect to the positive electrode of the charging device, and is the first end 851 of the positive conductive assembly. The sub-positive conductive assembly 853 includes a first end 854 of the sub-positive conductive assembly and a second end 855 of the sub-positive conductive assembly. The first end 853 of the sub-positive conductive assembly is connected to the positive charging connection terminal 170, and the second end 855 of the sub-positive conductive assembly is connected to the first contactor contact 621, and is the second end 852 of the positive conductive assembly.

As shown in FIG. 12, in some embodiments, the sub-positive conductive assembly 853 includes a first positive conductive member 125 and a second positive conductive member 127. The first positive conductive member 125 includes a first end 125A of the first positive conductive member and a second end 125B of the first positive conductive member. The first end 125A of the first positive conductive member is the first end 853 of the sub-positive conductive assembly. The second positive conductive member 127 includes a first end 127A of the second positive conductive member and a second end 127B of the second positive conductive member. The first end 127A of the second positive conductive member is connected to the second end 125A of the first positive conductive member, and the second end 127B of the second positive conductive member is the second end 855 of the sub-positive conductive assembly, that is, the second end 852 of the positive conductive assembly.

Specifically, the first end 125A of the first positive conductive member is connected to the positive charging connection terminal 170, to introduce a positive charging current, and the second end 127B of the second positive conductive member is connected to the first contactor 122.

As shown in FIGs. 3 and 9, the additional positive conductive assembly 865 includes the first end 866 of the additional positive conductive assembly and the second end 867 of the additional positive conductive assembly. The first end 866 of the additional positive conductive assembly is connected to the second end of the at least one phase of winding 701, and the second end 867 of the additional positive conductive assembly is connected to the second contactor contact 622.

As described above, in a boost charging process, a path of a positive current reuses a part of the A-wire 801. In this application, a path of the A-wire conductive assembly 860 that is from the second end 862 of the A-wire conductive assembly to the third end 863 of the A-wire conductive assembly forms the additional positive conductive assembly 865 (or in other words, the additional positive conductive assembly 865 forms the path of the A-wire conductive assembly 860 that is from the second end 862 of the A-wire conductive assembly to the third end 863 of the A-wire conductive assembly), where the second end 862 of the A-wire conductive assembly is the first end 866 of the additional positive conductive assembly, and the third end 863 of the A-wire conductive assembly is the second end 867 of the additional positive conductive assembly. In other words, the third A-wire conductive member 123, the fourth A-wire conductive member 131, the second end 176C of the first A-wire conductive member, the second end 176B of the first A-wire conductive member, the fixed seat 132, and the second A-wire conductive member 136 form the additional positive conductive assembly 865. Alternatively, as shown in FIG. 10, the third A-wire conductive member 123, the fourth A-wire conductive member 131, the fixed seat 132, and the second A-wire conductive member 136 form the additional positive conductive assembly 865.

It will be understood that the third end 863 of the A-wire conductive assembly 860 is connected to the positive charging connection terminal 170 through the first contactor 122 and the sub-positive conductive assembly 853.

With reference to FIG. 2 and FIG. 3, the positive charging current is further shunted to the second capacitor 174 before passing through the first contactor 122. Therefore, the second positive conductive member 127 further includes a third end 127C of the second positive conductive member, and the third end 127C of the second positive conductive member is connected to a second input terminal 72 of a positive electrode of the second capacitor, to be connected to the positive electrode of the second capacitor 174.

As shown in FIG. 3, the controller 800 further includes a second switching element 124 and a third positive conductive member 128. According to a principle diagram 2, when boost charging is not required, the first positive conductive member 125 directs the positive charging current to the second switching element 124. Specifically, the first positive conductive member 125 further includes a third end 125C of the first positive conductive member, and a first end of the second switching element 124 is connected to the third end 125C of the first positive conductive member. The third positive conductive member 128 includes a first end 128A of the third positive conductive member and a second end 128B of the third positive conductive member. The first end 128A of the third positive conductive member is connected to a second end of the second switching element 124, and the second end 128B of the third positive conductive member is at least indirectly connected to the positive electrode of the battery pack 600.

Specifically, the second end 128B of the third positive conductive member is connected to a positive connection terminal 71, and the positive connection terminal 71 is equipotentially connected to the positive direct current bus connection terminal 58 (for example, a terminal of a same copper bar). Therefore, the second end 128B of the third positive conductive member is connected to the direct current bus connection terminal 58, and then is connected to the positive electrode of the battery pack 600 through the first connection assembly 9.

In some embodiments, in the controller 800, negative charging current wiring is set in the following manner.

As shown in FIG. 3 and FIG. 13, the controller 800 includes a negative conductive assembly 840. The negative conductive assembly 840 includes a first end 841 of the negative conductive assembly and a second end 842 of the negative conductive assembly. The first end 841 of the negative conductive assembly is connected to the negative electrode of the charging device, and the second end 842 of the negative conductive assembly is at least indirectly connected to the negative electrode of the battery pack 600.

In some embodiments, the negative conductive assembly 840 includes the negative charging connection terminal 171 and a sub-negative conductive assembly 843. The negative charging connection terminal 171 is disposed in the charging connector socket 115, is configured to connect to the negative electrode of the charging device, and is the first end 841 of the negative conductive assembly. The sub-negative conductive assembly 843 includes a first end 844 of the sub-negative conductive assembly and a second end 845 of the sub-negative conductive assembly, the first end 844 of the sub-negative conductive assembly is configured to connect to the negative charging connection terminal 171, and the second end 845 of the sub-negative conductive assembly is the second end 842 of the negative conductive assembly.

In some embodiments, the sub-negative conductive assembly 843 includes a first negative conductive member 126 and a second negative conductive member 92. The first negative conductive member 126 includes a first end 126A of the first negative conductive member and a second end 126B of the first negative conductive member. The first end 126A of the first negative conductive member is the first end 844 of the sub-negative conductive assembly. The second negative conductive member 92 includes a first end 92A of the second negative conductive member and a second end 92B of the second negative conductive member. The first end 92A of the second negative conductive member is connected to the second end 126B of the first negative conductive member, and the second end 92B of the second negative conductive member is the second end 845 of the sub-negative conductive assembly, that is, the second end 842 of the negative conductive assembly.

Specifically, the first end 126A of the first negative conductive member is connected to the negative charging connection terminal 171, to introduce a negative charging current. The second end 92B of the second negative conductive member is connected to the negative direct current bus connection terminal 60, and then is connected to the negative electrode of the battery pack 600 through the first connection assembly 9. The first end 92A of the second negative conductive member is connected to the second end 126B of the first negative conductive member through a negative connection terminal 70.

The following describes a connection manner between the power module 83 and each of the first capacitor 173 and the second capacitor 174.

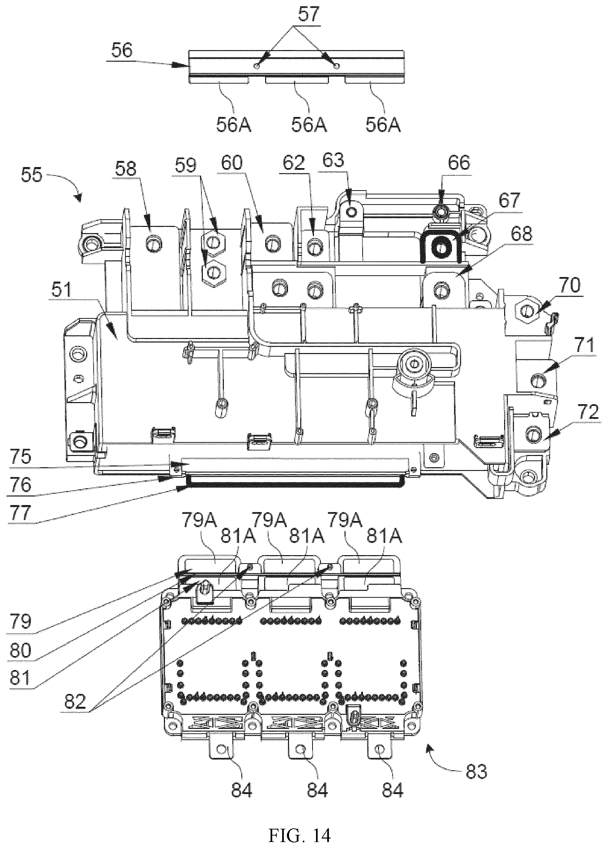

As shown in FIG. 14, the power module 83 includes a three-phase connection terminal 84, a positive connection terminal 79 of the power module, and a negative connection terminal 81 of the power module. The three-phase connection terminal 84 is configured to connect to the first end of each of the three-phase winding 701. The positive connection terminal 79 of the power module is configured to at least indirectly connect to the positive electrode (the positive direct current bus 807) of the battery pack 600. The negative connection terminal 81 of the power module is configured to at least indirectly connect to the negative (the negative direct current bus 808) of the battery pack 600.

The first terminal seat 99 of the controller 800 is connected to the motor terminal seat 146 of the motor 700, so that the three-phase bridge arm 803 of the power module 83 is connected to the first end of the three-phase winding 701. The three-phase connection terminal 84 of the power module 83 is connected to a middle of the three-phase bridge arm 803 inside the power module. Inside the controller 800, the three-phase connection terminal 84 is connected to the three-phase connection terminal 101 of the first terminal seat 99 (referring to FIG. 3), and is then connected to the three-phase winding 701 through the electrical control three-phase connection terminal 147 and the motor three-phase connection terminal 145 of the motor terminal seat 146.

As shown in FIG. 3, FIG. 5, and FIG. 14, in some embodiments, the controller 800 further includes a capacitor assembly 55. The first capacitor 173, the second capacitor 174, the first fuse 134, the second fuse 135, and the third fuse 133 are all disposed in the capacitor assembly 55. The positive direct current bus support position 58A, the positive direct current bus connection terminal 58, the A-wire support position 59, the negative direct current bus support position 60A, and the negative direct current bus connection terminal 60 are also disposed in the capacitor assembly 55. The positive connection terminal 71 and the negative connection terminal 70 are also disposed in the capacitor assembly 55.

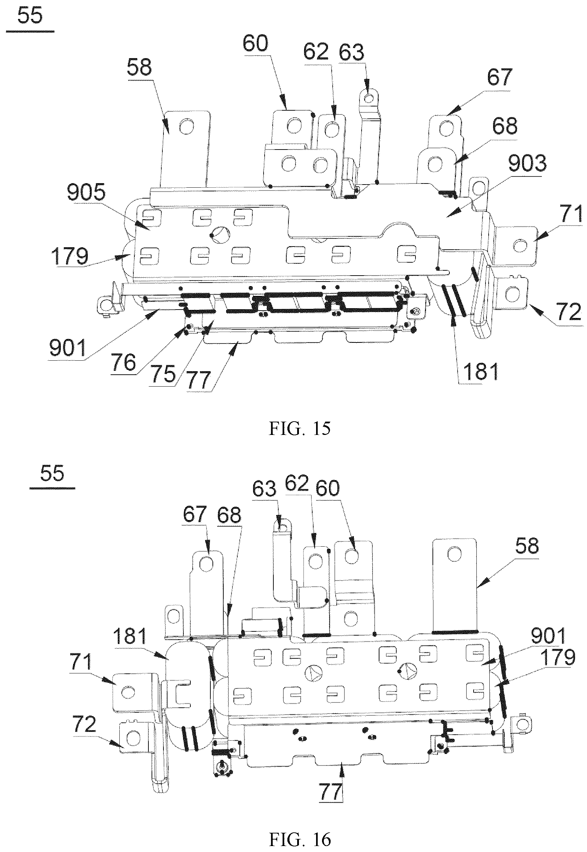

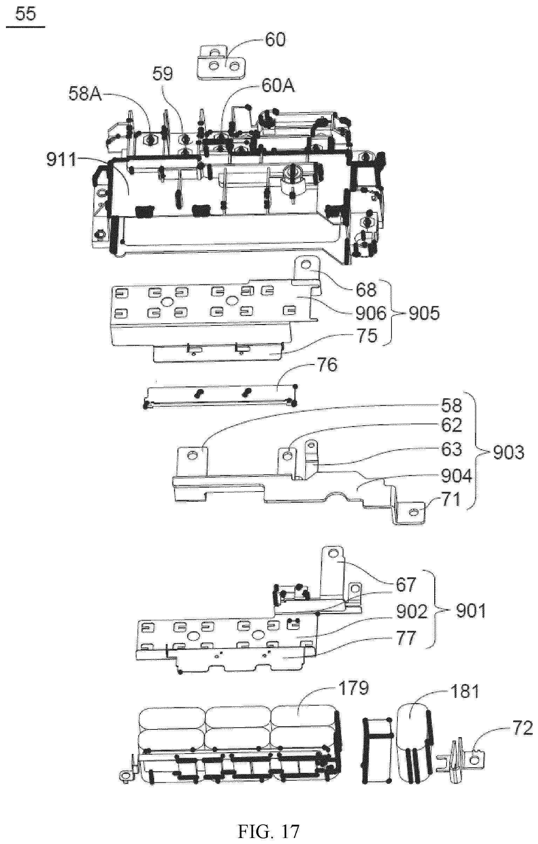

As shown in FIG. 14 to FIG. 17, in some embodiments, the capacitor assembly 55 includes an insulating base 911 and a first capacitor core 179, and the first capacitor core 179 is mounted on the insulating base 911. The first capacitor core 179 is a core of the first capacitor 173. The insulating base 911 is provided with the A-wire support position 59. As described above, the A-wire support position is at least configured to support the first end 176A of the first A-wire conductor segment. In some embodiments, the A-wire support position 59 is further configured to mount (connect) the first A-wire connection terminal 811 of the first connection assembly 9.

In some embodiments, the capacitor assembly 55 further includes a second capacitor core 181, the second capacitor core 181 being mounted on the insulating base 911, and the second capacitor core 181 being a core of the second capacitor 174.

In some embodiments, the capacitor assembly 55 further includes the positive direct current bus support position 58A and the negative direct current bus support position 60A. The positive direct current bus connection terminal 58 is located at the positive direct current bus support position 58A, and is configured to connect to the first positive direct current bus connection terminal 821. The negative direct current bus connection terminal 60 is located at the negative direct current bus support position 60A, and is configured to connect to the first negative direct current bus connection terminal 831. In some embodiments, the positive direct current bus support position 58A, the A-wire support position 59, and the negative direct current bus support position 60A are disposed in parallel, thereby facilitating a connection to the first connection assembly 9. In some embodiments, the A-wire support position 59 is located in a middle of the positive direct current bus support position 58A and the negative direct current bus support position 60A. In some embodiments, the A-wire support position 59, the positive direct current bus support position 58A, and the negative direct current bus support position 60A are disposed close to a first connector socket 809 (that is, the first plug interface 810), which is more convenient for integration improvement of the controller 800.

In some embodiments, the capacitor assembly 55 further includes a first capacitor positive conductive sheet 901 and a capacitor negative conductive sheet 905.

In some embodiments, the capacitor assembly 55 further includes a second capacitor positive conductive sheet 903. The second capacitor positive conductive sheet 903 is configured to connect to the first capacitor positive conductive sheet 901, and includes a second capacitor positive conductive sheet body 904, and the positive direct current bus connection terminal 58 and the positive connection terminal 71 that extend from the second capacitor positive conductive sheet body 904. Therefore, the whole of the second capacitor positive conductive sheet 903 and the positive direct current bus are equipotential. As described above, the positive connection terminal 71 is configured to at least indirectly connect to the positive electrode of the charging device. The second capacitor positive conductive sheet body 904 is connected to a positive terminal of the second capacitor core 181.

In some embodiments, the first capacitor positive conductive sheet 901 includes a first capacitor positive input terminal 67, a capacitor positive output terminal 77, and a first capacitor positive conductive sheet body 902 located between the first capacitor positive input terminal 67 and the capacitor positive output terminal 77. The first capacitor positive conductive sheet body 902 is connected to a positive terminal of the first capacitor core 179.

In some embodiments, the second capacitor positive conductive sheet 903 further includes a first fuse connection terminal 62 connected to the second capacitor positive conductive sheet body 904. A first terminal of the first fuse 134 is connected to the first fuse connection terminal 62, and a second terminal of the first fuse 134 is connected to the first capacitor positive input terminal 67. Therefore, a positive direct current bus current is introduced from the second capacitor positive conductive sheet 903, and enters the first capacitor 173 after passing through the first fuse 134. In some embodiments, the first fuse connection terminal 62 and the first capacitor positive input terminal 67 are located on a first side of the first capacitor core 179.

In some embodiments, the second capacitor positive conductive sheet 903 further includes a second fuse connection terminal 63 connected to the second capacitor positive conductive sheet body 904. The insulating base 911 is further provided with a second fuse output terminal 66. A first terminal of the second fuse 135 is connected to the second fuse connection terminal 63, and a second terminal of the second fuse 135 is connected to the second fuse output terminal 66. In some embodiments, the second fuse connection terminal 63 and the second fuse output terminal 66 are located on the first side of the first capacitor core 179. In some embodiments, the second fuse connection terminal 63 and the first fuse connection terminal 62 are located on a first side of the second capacitor positive conductive sheet body 904.

In some embodiments, the capacitor negative conductive sheet 905 includes a capacitor negative input terminal 68, a capacitor negative output terminal 75, and a capacitor negative conductive sheet body 906 located between the capacitor negative input terminal 68 and the capacitor negative output terminal 75. In some embodiments, the capacitor negative conductive sheet body 906 is connected to a negative terminal of the first capacitor core 179 and a negative terminal of the second capacitor core 181, so that the first capacitor 173 and the second capacitor 174 share a negative copper bar, that is, the negative terminal of the second capacitor core 181 is connected to the negative terminal of the first capacitor core 179. In some embodiments, a first terminal of the third fuse 133 is connected to the negative direct current bus connection terminal 60, and a second terminal of the third fuse 133 is connected to the capacitor negative input terminal 68. Therefore, a negative direct current bus current enters the first capacitor 173 and the second capacitor 174 after passing through the third fuse 133. In some embodiments, the negative direct current bus connection terminal 60 and the capacitor negative input terminal 68 are located on a same side of the first capacitor core 179.

In some embodiments, the capacitor assembly 55 further includes a second capacitor positive input terminal 72, and the second capacitor positive input terminal 72 is connected to the positive terminal of the second capacitor core 181. In addition, as described above, the second capacitor positive input terminal 72 is further configured to connect to a first end of the first switching element 122.

In some embodiments, the capacitor negative output terminal 75 and the capacitor positive output terminal 77 are configured to connect to the power module 83. In some embodiments, the capacitor negative output terminal 75 and the capacitor positive output terminal 77 are located on a second side of the first capacitor core 179. In some embodiments, a capacitor insulating member 76 is disposed between the capacitor negative output terminal 75 and the capacitor positive output terminal 77. In some embodiments, the capacitor negative conductive sheet body 906 and the first capacitor positive conductive sheet body 902 are disposed generally parallel with each other, for example, both are disposed parallel with a first plane. The capacitor negative output terminal 75 and the capacitor positive output terminal 77 are also disposed parallel with the first plane. The capacitor insulating member 76 is located between the capacitor negative output terminal 75 and the capacitor positive output terminal 77 in a direction perpendicular to the first plane. In some embodiments, the capacitor insulating member 76 is made of a plastic material. For example, the capacitor insulating member 76 is constructed of a plastic sheet.

As shown in FIG. 14, in some embodiments, the positive connection terminal 79 of the power module is configured to connect to the capacitor positive output terminal 77, so that the first capacitor positive conductive sheet 901 and the first fuse 134 are connected to the positive direct current bus connection terminal 58, that is, the positive direct current bus. Therefore, the positive direct current bus connection terminal 58 is at least indirectly connected to the positive connection terminal 79 of the power module. One end of the first capacitor positive conductive sheet 901 is connected to the positive connection terminal 79 of the power module, and the other end of the first capacitor positive conductive sheet 901 is configured to at least indirectly connect to the positive electrode of the battery pack 600. The negative connection terminal 81 of the power module is configured to connect to the capacitor negative output terminal 75, to be connected to the negative direct current bus connection terminal 60, that is, the negative direct current bus, through the capacitor negative conductive sheet 905 and the third fuse 133 Therefore, the negative direct current bus connection terminal 60 is at least indirectly connected to the negative connection terminal 81 of the power module. One end of the capacitor negative conductive sheet 905 is connected to the negative connection terminal 81 of the power module, and the other end of the capacitor negative conductive sheet 905 is configured to at least indirectly connect to the negative electrode of the battery pack 600. In some embodiments, the positive connection terminal 79 of the power module and the negative connection terminal 81 of the power module are located on a same side of the power module 83.

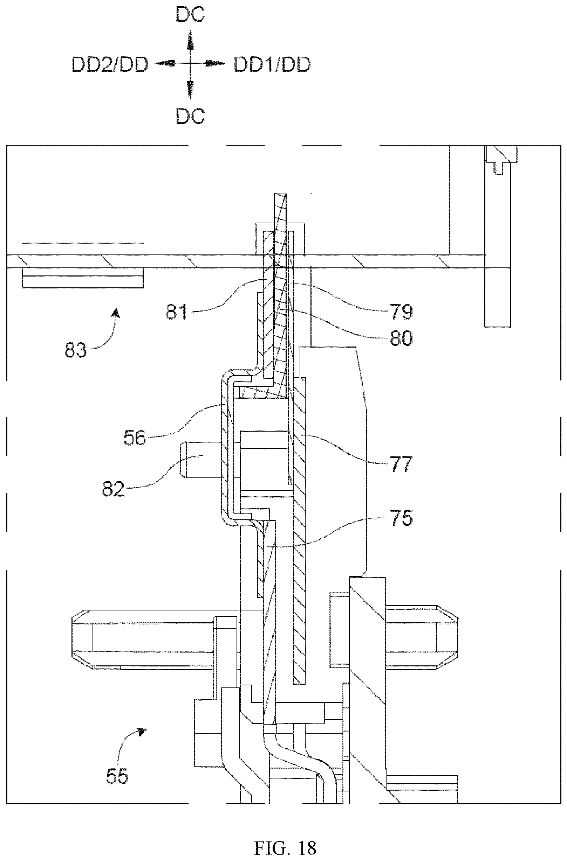

In some embodiments, as shown in FIG. 18, the positive connection terminal 79 of the power module is connected to the capacitor positive output terminal 77 through mutual stacking and overlapping (contacting) in an overlapping direction DD. The overlapping direction DD is a direction (that is, perpendicular to the foregoing first plane) perpendicular to a contact surface between the positive connection terminal 79 of the power module and the capacitor positive output terminal 77. In some embodiments, the positive connection terminal 79 of the power module and the capacitor positive output terminal 77 are mutually stacked and overlapped and are connected through welding. The positive connection terminal 79 of the power module includes three sub-power module positive connection terminals 79A that are respectively connected to a first end (the upper bridge 804) of the three-phase bridge arm 803. The capacitor positive output terminal 77 is connected to each of the three sub-power module positive connection terminals 79A through stacking and overlapping, so that the three sub-power module positive connection terminals 79A are connected at an input end.

In some embodiments, as shown in FIG. 14 and FIG. 18, the controller 800 further includes a conductive connection sheet 56. One end of the conductive connection sheet 56 is configured to connect to the negative connection terminal 81 of the power module, and the other end of the conductive connection sheet 56 is configured to connect to the capacitor negative output terminal 75, so that the negative connection terminal 81 of the power module is connected to the capacitor negative output terminal 75. For example, one end of the conductive connection sheet 56 is overlapped with the negative connection terminal 81 of the power module in the overlapping direction DD, and the other end of the conductive connection sheet 56 is overlapped with the capacitor negative output terminal 75 in the overlapping direction DD. Similarly, the negative connection terminal 81 of the power module includes three sub-power module negative connection terminals 81A that are respectively connected to a second end (the lower bridge 805) of the three-phase bridge arm 803, and the conductive connection sheet 56 is connected to each of the three sub-power module negative connection terminals 81A through stacking and overlapping. In some embodiments, the conductive connection sheet 56 is configured to overlap with one end of the negative connection terminal 81 of the power module to construct three overlapping positions 56A spaced apart from each other, and each overlapping position 56A is correspondingly overlapped with one sub-power module negative connection terminal 81A. In some embodiments, the conductive connection sheet 56 is connected to the negative connection terminal 81 of the power module through welding, for example, stacked and overlapped and connected through welding. The conductive connection sheet 56 is connected to the capacitor negative output terminal 75 through welding, for example, stacked and overlapped and connected through welding.

As shown in FIG. 18, the positive connection terminal 79 of the power module exceeds (longer than) the negative connection terminal 81 of the power module in a staggered direction DC. The capacitor positive output terminal 77 exceeds (longer than) the capacitor negative output terminal 75 in the staggered direction DC. The positive connection terminal 79 of the power module and the capacitor positive output terminal 77 are stacked in the overlapping direction DD and are staggered in the staggered direction DC. The staggered direction DC is parallel with the foregoing first plane, the overlapping direction DD is perpendicular to the staggered direction DC, the overlapping direction DD is perpendicular to the foregoing first plane, and the overlapping direction DD is a bi-directional direction, including a first overlapping direction DD1 and a second overlapping direction DD2 that are opposite to each other. The positive connection terminal 79 of the power module is located on a side of the negative connection terminal 81 of the power module that faces the first overlapping direction DD1, and is separated from the negative connection terminal 81 of the power module in the overlapping direction DD. The capacitor positive output terminal 77 is located on a side of the capacitor negative output terminal 75 that faces the first overlapping direction DD1, and is separated from the capacitor negative output terminal 75 in the overlapping direction DD. The conductive connection sheet 56 is stacked and overlapped with the negative connection terminal 81 of the power module on a side of the negative connection terminal 81 of the power module that faces the second overlapping direction DD2, and is stacked and overlapped with the capacitor negative output terminal 75 on a side of the capacitor negative output terminal 75 that faces the second overlapping direction DD2.

In some embodiments, the positive connection terminal 79 of the power module and the negative connection terminal 81 of the power module are parallel with each other, for example, are also parallel with the first plane. A power module insulating member 80 is disposed between the positive connection terminal 79 of the power module and the negative connection terminal 81 of the power module. The power module insulating member 80 is located between the positive connection terminal 79 of the power module and the negative connection terminal 81 of the power module in the overlapping direction DD.

In some embodiments, the power module insulating member 80 is constructed to bend towards the second overlapping direction and exceed the negative connection terminal 81 of the power module in the second overlapping direction DD2. Similarly, the capacitor insulating member 56 may also be constructed to bend towards the second overlapping direction and exceed the capacitor negative output terminal 75 in the second overlapping direction. In some embodiments, a middle part of the conductive connection sheet 56 in the staggered direction DC is constructed to depress towards the second overlapping direction DD2, and both sides (or both ends) of the conductive connection sheet 56 in the staggered direction DC are respectively overlapped with the negative connection terminal 81 of the power module and the capacitor negative output terminal 75.

In some embodiments, a first positioning component 82 is disposed at the negative connection terminal 81 of the power module or the capacitor negative output terminal 75, and a second positioning component 57 is disposed on the conductive connection sheet 56. The first positioning component 82 is disposed corresponding to and connected to the second positioning component 57, so that after the conductive connection sheet 56 is stacked and overlapped with one of the negative connection terminal 81 of the power module and the capacitor negative output terminal 75 at which the first positioning component 82 is disposed, the conductive connection sheet 56 cannot move relative to the one in a direction perpendicular to the overlapping direction DD, thereby ensuring welding precision between the conductive connection sheet 56 and the one.

In some embodiments, mounting positions of the power module 83 and the capacitor assembly 55 are correspondingly disposed in the box 10. Through design, after the power module 83 and the capacitor assembly 55 are mounted in the box 10, the positive connection terminal 79 of the power module and the capacitor positive output terminal 77 form a relative position at which the two overlap each other, and the relative position can be stably maintained under limiting action of respective mounting positions. In this case, the positive connection terminal 79 of the power module and the capacitor positive output terminal 77 may be connected through welding. Then, the conductive connection sheet 56 is separately connected to the negative connection terminal 81 of the power module and the capacitor negative output terminal 75 through welding, and the first positioning component 82 and the second positioning component 57 are configured to keep the conductive connection sheet 56 at a stable relative position relative to the negative connection terminal 81 of the power module and the capacitor negative output terminal 75, thereby ensuring welding precision. In this application, for example, laser welding is used, so that welding precision and welding process security can be improved.

In some embodiments, the first positioning component 82 may alternatively be simultaneously disposed at the negative connection terminal 81 of the power module and the capacitor negative output terminal 75, so that after the conductive connection sheet 56 is stacked and overlapped with the negative connection terminal 81 of the power module and the capacitor negative output terminal 75, the conductive connection sheet 56 cannot move relative to the two in a direction perpendicular to the overlapping direction.

In some embodiments, the first positioning component 82 includes at least two first positioning sub-components, the second positioning component 57 includes at least two second positioning sub-components, and the second positioning sub-component is disposed corresponding to and connected to the first positioning sub-component, so that the conductive connection sheet 56 is cannot rotate relative to the negative connection terminal 81 of the power module and the capacitor negative output terminal 75. In some embodiments, one of the first positioning component 82 and the second positioning component 57 is disposed as a bump, and the other of the first positioning component 82 and the second positioning component 57 is disposed as a groove or a through hole to accommodate the bump.

In an implementation not shown in this application, compared with the implementation shown in the figure, a difference lies in the following: the capacitor negative output terminal 75 and the capacitor positive output terminal 77 are disposed in an opposite manner (swapped), the positive connection terminal 79 of the power module and the negative connection terminal 81 of the power module are disposed in an opposite manner (swapped), the capacitor negative output terminal 75 and the negative connection terminal 81 of the power module are directly overlapped and connected through welding, and the capacitor positive output terminal 77 is connected to the positive connection terminal 79 of the power module through the conductive connection sheet 56.

In some embodiments, the power module 83 includes a first power module terminal and a second power module terminal, where the first power module terminal is one of the positive connection terminal 79 of the power module and the negative connection terminal 81 of the power module, and the second power module terminal is the other of the positive connection terminal 79 of the power module and the negative connection terminal 81 of the power module. The first power module terminal is connected to one end of the three-phase bridge arm 803, and the second power module terminal is connected to the other end of the three-phase bridge arm 803. In some embodiments, the first power module terminal and the second power module terminal are located on a same side of the power module 83.

In some embodiments, the capacitor assembly 55 includes a first capacitor terminal and a second capacitor terminal. The first capacitor terminal is configured to correspond to the first power module terminal and connect to the first power module terminal (when the first power module terminal is the positive connection terminal 79 of the power module, the first capacitor terminal is the capacitor positive output terminal 77; and when the first power module terminal is the negative connection terminal 81 of the power module, the first capacitor terminal is the capacitor negative output terminal 75). The second capacitor terminal is configured to correspond to the second power module terminal and connect to the second power module terminal (when the second power module terminal is the positive connection terminal 79 of the power module, the second capacitor terminal is the capacitor positive output terminal 77; and when the second power module terminal is the negative connection terminal 81 of the power module, the second capacitor terminal is the capacitor negative output terminal 75). In some embodiments, the first capacitor terminal and the second capacitor terminal are located on a same side of the capacitor assembly 55. In some embodiments, the first power module terminal and the first capacitor terminal are directly overlapped and connected through welding, and the second power module terminal is connected to the second capacitor terminal through the conductive connection sheet 56.

According to the controller in this application, the A-wire conductive assembly is disposed in the box, and the second end of the motor winding is connected to the middle of the first sub-battery pack and the second sub-battery pack that are connected in series, thereby implementing a battery heating function. Further, boost charging is implemented by reusing the motor winding and a part of the A-wire conductive assembly. The controller has a proper structure and stable performance. It will be understood that the electric assembly, the drive system, and the vehicle according to this application include all features and effects of the controller according to this application.

The procedures and steps in all the foregoing preferred implementations are merely examples. Unless adverse effects occur, various processing operations may be performed in an order different from the order of the foregoing procedures. The step order of the foregoing procedures may also be added, combined, or deleted based on an actual requirement.

In understanding the scope of this application, for example, the term "include" and derivations thereof used in this specification are intended to be open terms, which specify existence of a feature, an element, a component, a group, an assembly, and/or a step described, but not rule out other features, elements, components, groups, assemblies, and/or steps not described. This concept is also applicable to words with similar meanings, such as the term "include", "have", and derivatives thereof.

The term "be attached" or "attach" as used herein includes: a construction in which an element is directly fastened to another element by directly fastening the element to the another element; a construction in which an element is fastened to an intermediate member, and the intermediate member is fastened to another element in turn, to indirectly fasten the element to the another element; and a construction in which an element is integrated with another element, that is, an element is substantially a part of another element. The definition is also applicable to words with similar meanings, such as "connect", "join", "couple", "mount", "bond", "fasten", and derivatives thereof. Finally, the degree term used herein, such as "substantially", "approximately", or "roughly", represents a deviation that modifies the term so that the final result does not change significantly.

Unless otherwise defined, the technical and scientific terms used in this specification have the same meaning as those usually understood by a person skilled in the art in this application. The terms used in this specification are merely intended to describe specific implementation purposes, and are not intended to limit this application. A feature described in one implementation in this specification may be applied to another implementation alone or in combination with another feature, unless the feature is inapplicable or otherwise described in the another implementation.

This application is described in the foregoing implementations. However, it will be understood that the foregoing implementations are merely used for example and description purposes, and are not intended to limit this application to the scope of the described implementations. In addition, a person skilled in the art may understand that this application is not limited to the foregoing implementations, and further variations and modifications may be made according to the teachings of this application. These variations and modifications all fall within the protection scope of this application.

## Claims

1. A drive system (890), comprising:
a battery pack (600), comprising:
a first sub-battery pack (U1) and a second sub-battery pack (U2) that are connected in series;
an A-wire connection terminal (611) of the battery pack, one end of the A-wire connection terminal (611) of the battery pack is connected to a middle of the first sub-battery pack (U1) and the second sub-battery pack (U2);
a positive direct current bus connection terminal (612) of the battery pack, the positive direct current bus connection terminal (612) of the battery pack is connected to a positive electrode of the battery pack (600); and
a negative direct current bus connection terminal (613) of the battery pack, the negative direct current bus connection terminal (613) of the battery pack is connected to a negative electrode of the battery pack (600);
a motor (700), wherein one end of at least one phase of winding (701) of the motor (700) is connected to the other end of the A-wire connection terminal (611) of the battery pack; and
a controller (800), wherein the controller (800) comprises a power module (83), and the power module (83) comprises:
an at least one-phase connection terminal (84), the at least one-phase connection terminal (84) is connected to the other end of the at least one phase of winding (701) of the motor (700);
a positive connection terminal (79) of the power module, connected to the positive electrode of the battery pack (600); and
a negative connection terminal (81) of the power module, connected to the negative electrode of the battery pack (600),
wherein the A-wire connection terminal (611) of the battery pack is disposed between the positive direct current bus connection terminal (612) of the battery pack and the negative direct current bus connection terminal (613) of the battery pack.

2. The drive system (890) according to claim 1, wherein the battery pack (600) further comprises a battery pack connector socket (609), and the A-wire connection terminal (611) of the battery pack, the positive direct current bus connection terminal (612) of the battery pack, and the negative direct current bus connection terminal (613) of the battery pack are jointly disposed in the battery pack connector socket (609).

3. The drive system (890) according to claim 2, further comprising:
an A-wire (801), wherein one end of the at least one phase of winding (701) of the motor (700) is connected to the A-wire connection terminal (611) of the battery pack through the A-wire (801), the A-wire (801) comprises a first A-wire (814), one end of the first A-wire (814) is connected to the controller (800), the other end of the first A-wire (814) is connected to the A-wire connection terminal (611) of the battery pack, and an end of the first A-wire (814) that is configured to connect to the battery pack (600) is provided with a second A-wire connection terminal (812).

4. The drive system (890) according to claim 3, further comprising:
a positive direct current bus (807), wherein a first end of the positive direct current bus (807) is connected to the positive connection terminal (79) of the power module, a second end of the positive direct current bus (807) is connected to the positive electrode of the battery pack (600), the positive direct current bus (807) comprises a second positive direct current bus connection terminal (822), and the second positive direct current bus connection terminal (822) is connected to the positive direct current bus connection terminal (612) of the battery pack; and
a negative direct current bus (808), wherein a first end of the negative direct current bus (808) is connected to the negative connection terminal (81) of the power module, a second end of the negative direct current bus (808) is connected to the negative electrode of the battery pack (600), the negative direct current bus (808) comprises a second negative direct current bus connection terminal (832), and the second negative direct current bus connection terminal (832) is connected to the negative direct current bus connection terminal (613) of the battery pack,
wherein the second A-wire connection terminal (812) is disposed between the second positive direct current bus connection terminal (822) and the second negative direct current bus connection terminal (832).

5. The drive system (890) according to claim 4, further comprising a second plug connector (9B), wherein the second plug connector (9B) is configured to connect to the battery pack connector socket (609), and the second A-wire connection terminal (812), the second positive direct current bus connection terminal (822), and the second negative direct current bus connection terminal (832) are jointly disposed in the second plug connector (9B).

6. The drive system (890) according to claim 5, wherein
the first A-wire (814) further comprises an A-wire conductor segment (813), wherein a first end of the A-wire conductor segment (813) is at least indirectly connected to the controller (800), and a second end of the A-wire conductor segment (813) is connected to the second A-wire connection terminal (812);
the positive direct current bus (807) comprises a positive direct current bus conductor segment (823), wherein a first end of the positive direct current bus conductor segment (823) is at least indirectly connected to the controller (800), and a second end of the positive direct current bus conductor segment (823) is connected to the second positive direct current bus connection terminal (822);
the negative direct current bus (808) comprises a negative direct current bus conductor segment (833), wherein a first end of the negative direct current bus conductor segment (833) is at least indirectly connected to the controller (800), and a second end of the negative direct current bus conductor segment (833) is connected to the second negative direct current bus connection terminal (832); and
the A-wire conductor segment (813) is disposed between the positive direct current bus conductor segment (823) and the negative direct current bus conductor segment (833).

7. The drive system (890) according to claim 6, wherein
the first A-wire (814) further comprises a first A-wire connection terminal (811), wherein two ends of the first A-wire connection terminal (811) are respectively connected to the controller (800) and the first end of the A-wire conductor segment (813);
the positive direct current bus (807) further comprises a first positive direct current bus connection terminal (821), wherein two ends of the first positive direct current bus connection terminal (821) are respectively connected to the controller (800) and the first end of the positive direct current bus conductor segment (823);
the negative direct current bus (808) further comprises a first negative direct current bus connection terminal (831), wherein two ends of the first negative direct current bus connection terminal (831) are respectively connected to the controller (800) and the first end of the negative direct current bus conductor segment (833); and
the first A-wire connection terminal (811) is located between the first positive direct current bus connection terminal (821) and the first negative direct current bus connection terminal (831).

8. The drive system (890) according to claim 7, further comprising a first plug connector (9A), wherein the first plug connector (9A) is configured to connect to the controller, and the first positive direct current bus connection terminal (821), the first A-wire connection terminal (811), and the first negative direct current bus connection terminal (831) are jointly disposed in the first plug connector (9A).

9. The drive system (890) according to claim 8, wherein the second plug connector (9B), the positive direct current bus conductor segment (823), the negative direct current bus conductor segment (833), the A-wire conductor segment (813), the second positive direct current bus connection terminal (822), the first positive direct current bus connection terminal (821), the second negative direct current bus connection terminal (832), the first negative direct current bus connection terminal (831), the second A-wire connection terminal (812), the first A-wire connection terminal (811), and the first plug connector (9A) are jointly form a connection assembly (9).

10. The drive system (890) according to claim 6, wherein lengths of the A-wire conductor segment (813), the positive direct current bus conductor segment (823), and the negative direct current bus conductor segment (833) are substantially the same or similar.

11. The drive system (890) according to claim 8, wherein lengths of the A-wire conductor segment (813), the positive direct current bus conductor segment (823), and the negative direct current bus conductor segment (833) are the same between the first plug connector (9A) and the second plug connector (9B).

12. The drive system (890) according to claim 6, wherein wire diameters of the A-wire conductor segment (813), the positive direct current bus conductor segment (823), and the negative direct current bus conductor segment (833) are substantially the same or similar.

13. The drive system (890) according to claim 4, wherein the first A-wire (814), the positive direct current bus (807), and the negative direct current bus (807) have same inductance.

14. The drive system (890) according to claim 7, wherein the first positive direct current bus connection terminal (821), the first A-wire connection terminal (811), and the first negative direct current bus connection terminal (831) are jointly threaded through a first magnetic ring (93).

15. The drive system (890) according to claim 14, wherein the second positive direct current bus connection terminal (822), the second A-wire connection terminal (812), and the second negative direct current bus connection terminal (832) are jointly threaded through a second magnetic ring (94).

16. The drive system (890) according to claim 3, wherein
the A-wire (801) further comprises an A-wire conductive assembly (860), and the A-wire conductive assembly (860) is disposed in a box of the controller (800); and
the A-wire conductive assembly (860) comprises a first end (861) of the A-wire conductive assembly and a second end (862) of the A-wire conductive assembly, the first end (861) of the A-wire conductive assembly is connected to one end of the first A-wire (814), and the second end (862) of the A-wire conductive assembly is configured to at least indirectly connect to the at least one phase of winding (701) of the motor (700).

17. The drive system (890) according to claim 16, wherein the A-wire conductive assembly (860) further comprises:
a first A-wire conductive member (176), wherein the first A-wire conductive member (176) has a first end (176A) of the first A-wire conductive member and a second end (176B) of the first A-wire conductive member, and the first end (176A) of the first A-wire conductive member is the first end (861) of the A-wire conductive assembly; and
a second A-wire conductive member (136), wherein the second A-wire conductive member (136) has a first end (136A) of the second A-wire conductive member and a second end (136B) of the second A-wire conductive member, the first end (136A) of the second A-wire conductive member is connected to the second end (176B) of the first A-wire conductive member, and the second end (136B) of the second A-wire conductive member is the second end (862) of the A-wire conductive assembly.

18. The drive system (890) according to claim 17, wherein the controller (800) further comprises a charging connector socket (115), and the charging connector socket (115) comprises a positive charging connection terminal (170) and a negative charging connection terminal (171);
the positive charging connection terminal (170) is configured to connect to a positive electrode of a charging device, and the negative charging connection terminal (171) is configured to connect to a negative electrode of the charging device, and
the A-wire conductive assembly (860) further comprises a third end (863) of the A-wire conductive assembly, and the third end (863) of the A-wire conductive assembly is at least indirectly connected to the positive charging connection terminal (170).

19. The drive system (890) according to claim 18, wherein the A-wire conductive assembly (860) further comprises a third A-wire conductive member (123), and the third A-wire conductive member (123) has a first end (123A) of the third A-wire conductive member and a second end (123B) of the third A-wire conductive member; and
the first A-wire conductive member (176) further comprises a third end (176C) of the first A-wire conductive member, and the first end (123A) of the third A-wire conductive member is connected to the third end (176C) of the first A-wire conductive member, and the second end (123B) of the third A-wire conductive member is the third end (863) of the A-wire conductive assembly; or
the first end (123A) of the third A-wire conductive member is connected to the first end (136A) of the second A-wire conductive member, and the second end (123B) of the third A-wire conductive member is the third end (863) of the A-wire conductive assembly.

20. The drive system (890) according to claim 19, wherein the A-wire conductive assembly (860) further comprises a fourth A-wire conductive member (131); and
two ends of the fourth A-wire conductive member (131) are respectively connected to the third end (176C) of the first A-wire conductive member and the first end (123A) of the third A-wire conductive member, so that the first end (123A) of the third A-wire conductive member is connected to the third end (176C) of the first A-wire conductive member; or
two ends of the fourth A-wire conductive member (131) are respectively connected to the first end (136A) of the second A-wire conductive member and the first end (123A) of the third A-wire conductive member, so that the first end (123A) of the third A-wire conductive member is connected to the first end (136A) of the second A-wire conductive member.

21. The drive system (890) according to any one of claims 1 to 20, wherein each second end of the three-phase winding (701) is connected, through the A-wire connection terminal (611) of the battery pack, to the middle of the first sub-battery pack (U1) and the second sub-battery pack (U2) that are connected in series.

22. A vehicle, comprising the drive system (890) according to any one of claims 1 to 21, wherein the motor (700) is connected to wheels of the vehicle.
